# EUROPEAN PATENT APPLICATION

(11) **EP 4 542 969 A1**
(43) Date of publication of application: **23.04.2025**
(21) Application number: 24206099.4
(22) Date of filing: 11.10.2024
(51) Int. Cl.: H04L 67/51, H04W 48/18, H04W 76/10

(54) **INFORMATION PROCESSING APPARATUS, METHOD, PROGRAM**

(30) Priority: 20.10.2023 JP 2023181165
(71) Applicant: CANON KABUSHIKI KAISHA, Tokyo 146-8501 (JP)
(72) Inventor: SEKIGUCHI, Shiho, Tokyo, 146-8501 (JP)
(74) Representative: TBK

(57) **Abstract**

An information processing apparatus (101) transmits, to a communication apparatus (103), information related to a second network different from a first network to which the information processing apparatus (101) was connected when a predetermined instruction for executing network setting of the communication apparatus (103) was accepted; after the information related to the second network has been transmitted, searches for the communication apparatus (103) via the first network; based on the communication apparatus (103) not being discovered in the search via the first network, displays a screen related to a connection destination of the information processing apparatus (101); and after the screen is displayed, performs control such that the connection destination of the information processing apparatus (101) is a network that is based on a user instruction on the screen among the first network and the second network.

## Description

### BACKGROUND OF THE INVENTION

### Field of the Invention

The present invention relates to an information processing apparatus, a method, and a program.

### Description of the Related Art

A plurality of information processing apparatuses, such as PCs, sharing a device, such as a printer serving as a communication device, via a local area network (LAN) connected to the Internet is known. In some cases, the LAN is constructed as a wireless network, and in such cases, it is more convenient than a wired network in that the installation location of the device is not limited.

Japanese Patent Laid-Open No. 2018-191252 describes that in order to facilitate participation of a printer in an already-constructed LAN, a PC temporarily connects with the printer by wireless direct connection to conveniently connect the printer to an access point. It is described that the PC transmits, to the printer, information for connecting the printer to a specific access point via wireless direct communication. It is also described that a user is prompted to designate setting information of an access point, such as a Service Set Identifier (SSID) and a password, on the PC for a desired access point to which the user wishes to connect the printer. Japanese Patent Laid-Open No. 2020-88428 describes that in order to allow communication between a printer and a PC that are connected to different LANs, the PC is automatically connected to the same network as the printer.

### SUMMARY OF THE INVENTION

There is a demand for further improvement of user convenience in processing for allowing communication between a communication apparatus and an information processing apparatus via a network.

The present invention provides an information processing apparatus, a method, and a program for further improving user convenience in processing for allowing communication between a communication apparatus and an information processing apparatus via a network.

The present invention in its first aspect provides a method of controlling an information processing apparatus, as specified in claims 1 to 13.

The present invention in its second aspect provides an information processing apparatus as specified in claim 14.

The present invention in its third aspect provides a program as specified in claim 15.

According to the present invention, it is possible to further improve of user convenience in processing for allowing communication between a communication apparatus and an information processing apparatus via a network.

Further features of the present invention will become apparent from the following description of exemplary embodiments with reference to the attached drawings.

### BRIEF DESCRIPTION OF THE DRAWINGS

FIGS. 1A to 1C are diagrams illustrating configurations of a system.
FIG. 2 is a diagram illustrating a hardware configuration of an information processing apparatus and a communication apparatus.
FIG. 3 is a flowchart for explaining processing in the information processing apparatus.
FIG. 4 is a diagram illustrating a user interface screen.
FIG. 5 is a flowchart for explaining processing in the communication apparatus.
FIGS. 6A and 6B are flowcharts for explaining processing in the information processing apparatus.
FIG. 7 is a diagram illustrating a user interface screen.
FIGS. 8A to 8C are diagrams illustrating user interface screens.
FIGS. 9A and 9B are flowcharts for explaining processing in the information processing apparatus.
FIG. 10 is a diagram illustrating a user interface screen.
FIGS. 11A and 11B are flowcharts for explaining processing in the information processing apparatus.
FIG. 12 is a diagram illustrating a user interface screen.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### [First Embodiment]

In the present embodiment, a system including an information processing apparatus and a communication apparatus will be described. A printer will be described as an example of the communication apparatus, but the communication apparatus may be a personal computer (PC), a tablet terminal, a smartphone, a camera, a smart speaker, a scanner, or the like. Further, a PC will be described as an example of the information processing apparatus, but the information processing apparatus may be a smartphone, a tablet terminal, or the like. In the present embodiment, a configuration in which the PC executes processing for connecting the printer to an already-constructed Local Area Network (LAN) is assumed. Such processing is also referred to as network setup and includes the following operations.

In order to establish a wireless infrastructure connection and perform communication between the PC and the printer, the PC transmits a network setup instruction to the printer. A wireless infrastructure connection is a connection through an access point (AP), such as the PC and the printer connecting to and communicating through the same AP, for example. The AP is included, for example, in a wireless LAN router. In printers that do not have a separate display, it is not easy for a user to input a Service Set Identifier (SSID) and a password, which are for the printer to connect to an AP, to the printer without making a mistake. Therefore, the PC temporarily connects to the printer which is in wireless setting mode (which will be described later), transmits information such as an SSID and a password (hereinafter referred to as setting information of an AP) related to a desired AP to which a connection can be established to the printer, and connects the printer to the AP. For example, the PC obtains, from the printer, a list of APs to which the printer can connect and, if the AP to which the PC had been connected is included in the list, transmits setting information of the AP to which the PC had been connected to the printer. Then, the printer connects to the AP using the setting information of the AP received from the PC. Since such processing does not require the user to operate the printer or the AP, the user can perform network setup of the printer more conveniently.

As described above, setting information of an AP includes identification information of the AP, such as an SSID, and authentication information used in authentication processing of the AP, such as a password. In other words, setting information of an AP is network information of the AP. Upon connecting the PC and an AP via a wireless LAN interface, an operating system (OS) of the PC holds setting information of the AP as a wireless profile. Here, the wireless profile is information that includes an SSID of the AP to which the wireless LAN interface has connected and authentication information (e.g., a password) to be used in authentication processing. Wireless profiles are stored and managed by the OS. Therefore, setting information of an AP to be transmitted from the PC to the printer can be obtained from a wireless profile stored in OS.

For example, assume that while the PC has designated a 5-GHz frequency band SSID and is connected to an AP, the printer only supports wireless LAN communication in a 2.4-GHz frequency band. Assume that network setup for connecting the printer to a network of an AP is performed in such a case. At this time, a wireless profile of the AP with the 5-GHz frequency band SSID is stored in the OS of the PC. Meanwhile, a wireless profile of an AP to which to connect the printer is not stored in the OS. Therefore, it is necessary that the user designates setting information of an AP, such as an SSID and a password, on the PC for an AP desired by the user, that is, an AP to which to connect the printer. For example, it is necessary that the user designates setting information of an AP, such as an SSID and a password, on the PC for an AP with a 2.4-GHz frequency band SSID. Then, in the network setup, the setting information of the AP designated by the user is transmitted to the printer. As described above, the setting information of the AP transmitted to the printer in a network setup is not necessarily the same as the setting information of the AP to which the PC had been connected.

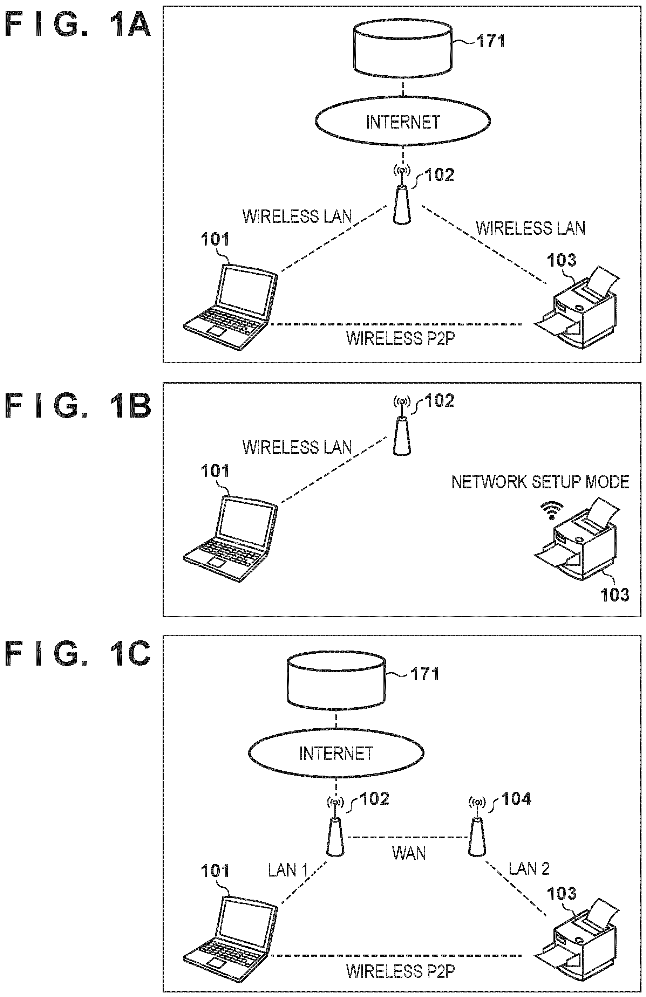

Incidentally, in a case where one wireless LAN router supports a plurality of frequency bands, one wireless LAN router may be a plurality of APs, each supporting a different frequency band, and the plurality of APs, each having a different SSID, may be enabled. Further, depending on the wireless LAN router, some have a security function for blocking communication so as not to allow communication between devices that are connected using different SSIDs even if the devices are connected to the same wireless LAN router. That is, in a case where an AP supporting 2.4 GHz and an AP supporting 5 GHz are enabled in one wireless LAN router, when a security function is enabled, control is performed so as not to execute communication between devices connected to the AP supporting 2.4 GHz and devices connected to the AP supporting 5 GHz. Such a function is also referred to as an SSID separating function and a privacy separator function. For example, when the security function is enabled in an AP having a plurality of SSIDs (assumed to be a first SSID and a second SSID), if the PC is connected to the AP using the first SSID, the PC cannot communicate with the printer, which is connected to the AP using the second SSID. Further, in a case where an SSID that the PC uses for connection and an SSID that the printer uses for connection are different as in FIG. 1C to be described later, the two devices may not necessarily be connected to the same AP. In a configuration in which the user connects the PC and the printer to different APs, the PC may not be able to communicate with the printer. In such cases, for example, the PC cannot discover the printer even when it searches for the printer on the network. Consequently, printer information cannot be registered in an application on the PC, and the PC cannot execute functions of the printer via a network with the application.

Further, for example, even if the PC and the printer connect to the same AP by setting information of the same AP as an AP to which the PC had been connected being transmitted to the printer, if the privacy separator function is enabled in that AP, the PC cannot communicate with the printer via that AP. Therefore, in the present embodiment, appropriate control is executed in a case where the PC cannot communicate with the printer even though the printer and the AP has been connected by the PC transmitting setting information of the AP to the printer. Specifically, in the present embodiment, when the PC cannot discover the printer via a network of an AP to which the PC had been connected and discovers the printer in a network of an AP to which the printer is connected, the PC displays a confirmation screen to the user. Then, control is performed so as to set a network to which the PC is connected is the same network as the printer based on a user instruction on the confirmation screen. With this, control is performed so as to set a network to which the PC is connected to a network to which the printer is connected only when the user determines that the network to which the PC is connected may be changed. That is, it is possible to prevent a situation such as that in which communication with the printer cannot be performed as a result of the network to which the PC is connected being automatically switched without the user's intention. Further, the user does not need to, for example, return the network to which a switch has been made without the user's intention to an original connection destination network, and thereby, convenience can be improved.

FIG. 1 is a diagram illustrating a configuration of a system in the present embodiment. FIG. 1A illustrates a state in which a PC 101 and an AP 102 are connected by a wireless LAN. A printer 103 is also connected to the AP 102 by a wireless LAN. That is, the PC 101 is in a state in which it can communicate with the printer 103 via the AP 102, and a wireless infrastructure connection is established. In a wireless infrastructure connection, the PC 101 can construct a network environment in which it can communicate with two or more devices. If the printer 103 and the AP 102 are connected by a wireless LAN and the PC 101 and the printer 103 can communicate via the AP 102, it can be said that the printer 103 has established a wireless infrastructure connection. That is, in FIG. 1A, the PC 101 may be in a state in which it is connected with the AP 102 via a wired LAN. An external server 171 is a server capable of providing services via the Internet to apparatuses connected to the AP 102. For example, it is a server from which the PC 101 can download a printer driver of the printer 103. In FIG. 1A, a LAN formed by the AP 102 includes the AP 102, the printer 103, and the PC 101. Meanwhile, a Wide Area Network (WAN) includes the AP 102 and the external server 171.

FIG. 1C illustrates a configuration in which an AP 104 is connected by WAN to a LAN 1 formed by the AP 102. Generally, it is desirable that the AP 104 connects by LAN to the LAN 1 formed by the AP 102, but the user may unintentionally construct a network. In this case, a LAN 2 formed by the AP 104 may be a different network from the LAN 1, and the printer 103 connected to the LAN 2 and the PC 101 connected to the LAN 1 may not be able to communicate with each other. The AP 104 can access the external server 171 via the WAN connection of the AP 102. That is, the printer 103 connected to the LAN 2 formed by the AP 104 can access the external server 171.

There is a connection method called a wireless direct connection in which communication can only be performed between two devices. The PC 101 and the printer 103 can also be connected Peer to Peer (hereinafter referred to as a P2P connection) via a wireless direct connection. However, during the wireless direct connection, the PC 101 and the printer 103 each are using the wireless LAN interface therein for the wireless direct connection and thus cannot communicate with devices other than each other. Therefore, the wireless direct connection is often used as a temporary connection. In the present embodiment, the PC 101 performs network setup processing (P2P wireless setting processing) for connecting the printer 103 to the AP 102 or the AP 104 by a wireless LAN connection. Specifically, the PC 101 transmits setting information of the AP 102 (or the AP 104) to the printer 103 via the wireless direct connection and thereby causes the printer 103 to connect to the AP 102 (or the AP 104). In a network setup, the PC 101 transmits the setting information of the AP 102 (or the AP 104) to the printer 103 using the wireless direct connection. In the present embodiment, a state in which the printer 103 can receive a network setup instruction including setting information of an AP is defined as "wireless setting mode" or "network setup mode." FIG. 1B will be described later.

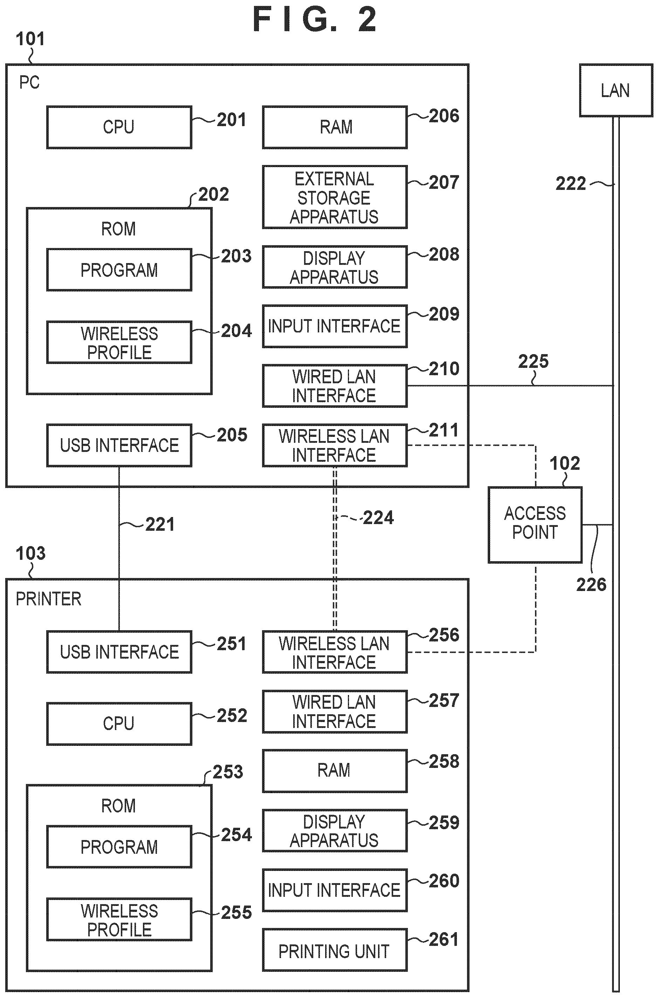

FIG. 2 is a diagram illustrating a hardware configuration of a communication system including the PC 101 and the printer 103 according to the present embodiment. The PC 101 includes a CPU 201, a ROM 202, a RAM 206, an external storage apparatus 207, a display apparatus 208, and an input interface 209. The CPU 201, the ROM 202, the RAM 206, and the like form a computer of the PC 101 for executing a program. The PC 101 also includes a Universal Serial Bus (USB) interface 205, a wired LAN interface 210, and a wireless LAN interface 211. The PC 101 is not limited to the configuration illustrated in FIG. 2 and includes, as appropriate, functional blocks that a device adopted as the PC 101 can execute.

The CPU 201 is a processor that reads and executes a control program stored in the ROM 202 and controls the entire PC 101 and executes processes indicated in flowcharts to be described later according to the control program. As a result of the control program being executed, various functions of the PC 101, such as control of communication with an external device such as the printer 103, generation of a print job to be outputted to the printer 103, and instruction of network setup, are realized. The RAM 206 is constituted by a DRAM, an SRAM, or the like, which requires a backup power supply, and is used as a memory area for storing temporary setting information, management data, and the like for when the PC 101 operates. Further, the RAM 206 is also used as a temporary storage area, such as a main memory, a work area, and the like of the CPU 201, and is also used as a transmission buffer for temporarily storing a print job generated to be transmitted to the printer 103.

The ROM 202 stores a program 203 corresponding to various processes including a program for network setup processing for transmitting setting information of an AP to a printer, a wireless profile 204 to be described later, and the like. The above network setup processing will be described later in detail. In addition, the external storage apparatus 207 stores an operating system (OS), a printer driver, and various other types of data. The display apparatus 208 is constituted by a light emitting diode (LED), a liquid crystal display (LCD), or the like and displays various user interface screens of the OS or the program 203 and notifies the state of the PC 101. The input interface 209 is an interface for receiving data input or a user instruction operation from the user by an operation being performed on an operation unit such as a keyboard. The operation unit may be a physical keyboard, a physical button, and the like or may be a software keyboard, a software button, and the like displayed on the display apparatus 208. That is, the input interface 209 may accept input from the user via the display apparatus 208.

The program for network setup processing is an application program for performing setting for connecting with an AP to which to connect the printer 103 and may include additional functions other than a network setup function. Hereinafter, the program for network setup processing will be referred to as the setup application. For example, the setup application may include a function that causes the printer 103 to perform printing, a function that causes the printer 103 to scan a document set therein, a function for confirming the state of the printer 103, and the like. The setup application may include a function for transmitting information obtained from the printer 103, personal information of the user obtained in the PC 101, and the like to a service management server (not illustrated). The external server 171 may be such a service management server. The setup application is stored in the ROM 202, for example, by being installed from the external server 171 by Internet communication via the wireless LAN interface 211. Assume that the setup application is an application program provided by a vendor of the printer 103.

The ROM 202 also stores network information. The network information contains IP addresses assigned to the wireless LAN interface 211 and the wired LAN interface 210 of the PC 101 as well as an IP address and a subnet mask of an AP to which the PC 101 is connected. The network information also contains a wireless profile of an AP to which the PC 101 has connected. In other words, the ROM 202 stores history information of APs to which the PC 101 had previously been connected. The wireless profile information contains an SSID, security settings, and a password of an AP to which the PC 101 had been connected.

The wired LAN interface 210 and the wireless LAN interface 211 are components for connecting to an external apparatus such as the printer 103 or the AP 102 to perform data communication. For example, the wireless LAN interface 211 can connect to an access point (not illustrated) in the printer 103. The wireless LAN interface 211 controls transmission and reception of data conforming to a communication standard defined in IEEE 802.11 in accordance with an instruction from the CPU 201. A wireless communication method to be used at that time is, for example, WirelessFidelity (Wi-Fi)^{®} defined by a world organization, Wi-Fi Alliance, and is defined as a standard for wireless LANs. Further, the wireless LAN interface 211 includes an access point for connecting with an apparatus, such as the printer 103, as an access point inside the PC 101. Use of this access point is commonly called tethering. A wireless LAN interface 256 of the printer 103 can connect to that access point. By the wireless LAN interface 211 activating that access point, the PC 101 acts as an access point. By the wireless LAN interface 256 and the access point within the wireless LAN interface 211 connecting, the PC 101 and the printer 103 can communicate with each other. In addition, if the wireless LAN interface 211 of the PC 101 is connected to the Internet, the printer 103 can also connect to the Internet via the wireless LAN interface 211.

The PC 101 can connect peer-to-peer (connect P2P or connect directly) to the printer 103 via a USB cable 221 or via a wireless direct connection 224, which uses the wireless LAN interface 211. The PC 101 can also connect to a LAN 222 via an Ethernet cable 225, and if the printer 103 can also connect to the LAN 222, the PC 101 and the printer 103 can communicate with each other over the same LAN 222 environment. Further, the PC 101 can connect to the LAN 222 by connecting to the AP 102 using the wireless LAN interface 211 and the AP 102 connecting to the LAN 222 via an Ethernet cable 226. In addition, if the printer 103 can connect to the AP 102, the PC 101 and the printer 103 can communicate with each other via the AP 102.

The printer 103 includes a CPU 252, a ROM 253, a RAM 258, a display apparatus 259, an input interface 260, a USB interface 251, the wireless LAN interface 256, and a wired LAN interface 257. The CPU 252, the ROM 253, the RAM 258, and the like form a computer of the printer 103 for executing a program. The printer 103 is not limited to the configuration illustrated in FIG. 2 and includes, as appropriate functional blocks that a device (e.g., a multifunction peripheral (MFP)) adopted as the printer 103 can execute.

The CPU 252 is a processor that reads and executes a control program stored in the ROM 253 and controls the entire printer 103 and executes processes indicated in flowcharts to be described later according to the control program. As a result of the control program being executed, various functions of the printer 103, such as control of communication with an external apparatus such as the PC 101, are realized. The RAM 258 is constituted by a DRAM, an SRAM, or the like, which requires a backup power supply, and is used as a memory area for storing temporary setting information, management data, and the like for when the printer 103 operates. Further, the RAM 258 is also used as a temporary storage area, such as a main memory, a work area, and the like of the CPU 252, and may operate as a reception buffer, for example, for temporarily holding print information received from the PC 101 or the like.

The ROM 253 is a non-volatile flash memory that stores fixed data such as control programs to be executed by the CPU 252, data tables, and an embedded OS. In the present embodiment, each control program stored in the ROM 253 perform software execution control such as scheduling, task switching, and interrupt processing under the control of the embedded OS stored in the ROM 253.

The ROM 253 stores a program 254, a wireless profile 255, and the like. Here, the wireless profile 255 is information that includes an SSID of an AP to which the wireless LAN interface 256 has connected, authentication information (password, etc.), and the like. The wireless profile 255 is stored and managed by the CPU 252 executing the program 254 included in the ROM 253. For example, when the printer 103 is powered on, the printer 103 can reconnect to a previous network by using the wireless profile 255. Further, for example, the printer 103 may be configured to manage a plurality of wireless profiles, similarly to the OS of the PC 101.

The ROM 253 also stores a unique SSID that is uniquely set to the printer 103. Here, the unique SSID is uniquely defined for a manufacturer of the printer or a printer model, and the wireless LAN interface 256 of the printer 103 can act as an AP corresponding to this unique SSID. Thus, the PC 101 can connect to the printer 103 operating as an AP corresponding to the unique SSID via the wireless direct connection 224 similarly to a case where it is connected to the AP 102.

The display apparatus 259 is constituted by a light emitting diode (LED), a liquid crystal display (LCD), or the like and displays various menus and notifies the state of the printer 103. The input interface 260 is an interface for receiving data input or a user instruction operation from the user by an operation being performed on an operation unit such as a keyboard. The operation unit may be a physical keyboard, a physical button, and the like or may be a software keyboard, a software button, and the like displayed on the display apparatus 259. That is, the input interface 260 may accept input from the user via the display apparatus 259.

A printing unit 261 discharges a printing agent, such as ink, onto a printing medium, such as a cut sheet, based on image data to form an image on the printing medium and outputs a printing result. In addition, when it is determined that a power-on is a power-on at the time of arrival, the printing unit 261 is configured to perform initial installation processing including cleaning of a print head and registration adjustment for adjusting a discharge position of ink. The printing unit 261 is not only limited to an inkjet printing method and may take a configuration in which another printing method such as an electrophotographic method is employed.

The printer 103 can perform P2P communication with the PC 101 via the USB cable 221 or via the wireless direct connection 224. Further, the printer 103 can connect to the LAN 222 by connecting to the AP 102 using the wireless LAN interface 256 and the AP 102 connecting to the LAN 222 via the Ethernet cable 226. In the description of FIG. 2, the processes are distributed between the PC 101 and the printer 103 as described above as one example but may be configured to be distributed differently.

Modes and connection methods for executing wireless communication using wireless LAN interfaces will be described below.

### <Regarding Direct Connection Method>

Direct connection refers to a form in which apparatuses are directly connected wirelessly to each other without going through an external device, such as the AP 102. Direct connection is also referred to as Peer to Peer connection (P2P connection). The printer 103 is capable of operating in a mode (direct connection mode) for performing communication by direct connection as one of the connection modes. In Wi-Fi communication, there are a plurality of modes for performing communication by direct connection, such as software AP mode and Wi-Fi Direct (WFD) mode.

A mode in which direct connection is executed by WFD is called the WFD mode. WFD is a standard established by Wi-Fi Alliance and is a standard included in the IEEE 802.11 series communication standard. In the WFD mode, after a search for a device to be a communication partner has been performed according to a device search command, P2P group owner (GO) and P2P client roles are determined, and then remaining wireless connection processing is performed. A group owner corresponds to a Wi-Fi master station (master device), and a client corresponds to a Wi-Fi slave station (slave device). This role determination is also called GO Negotiation. In the WFD mode in a state prior to role determination, the printer 103 is in a state in which it is neither a master station nor a slave station. Specifically, between devices that perform communication, first, one device issues a device search command and searches for a device with which to connect in the WFD mode. When the other device to be a communication partner is discovered, information related to services and functions that each device can provide is confirmed between the two. This confirmation of device provision information is optional and not mandatory. This device provision information confirmation phase corresponds to, for example, P2P Provision Discovery. Next, by confirming each other's device provision information, it is determined which will be a P2P client and which will a P2P group owner. When the client and the group owner are determined, they exchange parameters for communicating with each other via WFD. Remaining wireless connection processing and IP connection processing are performed between the client and the group owner based on the exchanged parameters. In the WFD mode, the printer 103 may always operate as a GO without executing the above-described GO Negotiation in the printer 103. That is, the printer 103 may operate in WFD mode that is Autonomous GO mode. That is, a state in which the printer 103 is operating in the WFD mode is, for example, a state in which connection via WFD is not established but the printer 103 is operating as a GO or a state in which connection via WFD is established and the printer 103 is operating as a GO.

In the software AP mode, between devices (e.g., the PC 101 and the printer 103) that perform communication, one device (e.g., the PC 101) is a client that fulfills a role of requesting various services. The other device realizes a function of an access point in Wi-Fi according to software settings. The software AP corresponds to a Wi-Fi master station, and a client corresponds to a Wi-Fi slave station. In the software AP mode, a client searches for a device to be the software AP according to a device search command. When the software AP is discovered, remaining wireless connection processing (e.g., establishment of wireless connection) is performed between the client and the software AP, and then IP connection processing (e.g., assigning of an IP address) is performed. Regarding commands and parameters to be transmitted and received when realizing wireless connection between the client and the software AP, those specified in a Wi-Fi standard may be used, and the description thereof will be omitted here.

In the present embodiment, when the printer 103 establishes and maintains direct connection, the printer 103 operates as a master station in a network to which it belongs. A master station is a device that constructs a wireless network and is a device that provides parameters used to connect to the wireless network to a slave station. The parameters used to connect to the wireless network are, for example, parameters related to the channel used by the master station. By receiving the parameters, a slave station connects to the wireless network constructed by the master station using the channels used by the master station. In the direct connection mode, the printer 103 operates as a master station, and so, the printer 103 can determine which frequency bands and channels to use for communication in the direct connection mode. In the present embodiment, assume that the printer 103 can use channels corresponding to a 2.4-GHz frequency band and channels corresponding to a 5-GHz frequency band for communication in the direct connection mode.

### <Regarding Infrastructure Connection Method>

Infrastructure connection is a connection form for devices (e.g., the PC 101 and the printer 103) that perform communication to connect with an access point (e.g., the AP 102) that controls a network of the devices and communicate with each other via the access point. The printer 103 is capable of operating in a mode (infrastructure connection mode) for performing communication by infrastructure connection as one of the connection modes.

In infrastructure connection, each device searches for an access point according to a device search command. When an access point is discovered, remaining wireless connection processing (e.g., establishment of wireless connection) is performed between the device and the access point, and then IP connection processing (e.g., assigning of an IP address) is performed. Regarding commands and parameters to be transmitted and received when realizing wireless connection between the device and the access point, those specified in a Wi-Fi standard may be used, and the description thereof will be omitted here.

In the present embodiment, when the printer 103 operates in infrastructure connection, the AP 102 operates as a master station and the printer 103 operates as a slave station. That is, in the present embodiment, infrastructure connection refers to connection between the printer 103 operating as the slave station and the AP 102 operating as the master station. When the printer 103 establishes an infrastructure connection and the PC 101 establishes an infrastructure connection with the AP 102, communication via the AP 102 becomes possible between the printer 103 and the PC 101. The channels used for communication in infrastructure connection are determined by the AP 102, and so, the printer 103 performs communication in infrastructure connection using the channels determined by the AP 102. In the present embodiment, assume that the printer 103 can use channels corresponding to a 2.4-GHz frequency band and channels corresponding to a 5-GHz frequency band for communication in infrastructure connection. The printer 103 can also use channels corresponding to a Dynamic Frequency Selection (DFS) band of the 5-GHz frequency band for communication in infrastructure connection. In order to communicate with the printer 103 via the AP 102, the PC 101 needs to recognize (search and discover) that the printer 103 belongs to a network that has been formed by the AP 102 and to which the PC 101 belongs.

### <Regarding Network Setup Mode>

The printer 103 can operate in network setup mode. A trigger for the printer 103 to start operation in the network setup mode may be, for example, that the user presses a button for the network setup mode or that the printer 103 activates (powers on) for the first time after arrival. The button for the network setup mode may be a hardware (physical) button provided in the printer 103 or a software button displayed by the printer 103 on the display apparatus 259.

The printer 103 enables Wi-Fi communication when it starts operating in the network setup mode. Specifically the printer 103 enables an AP (setup AP) inside the printer 103 dedicated to the network setup mode as Wi-Fi communication enabling processing. An SSID of the setup AP corresponds to the unique SSID described above. With this, the printer 103 enters a state in which it is possible to establish a direct connection with the PC 101 via Wi-Fi. Assume that connection information (SSID and password) for connecting with the setup AP is held in advance in a setup application (program 203) installed on the PC 101 and the PC 101 knows in advance the connection information for connecting with the setup AP. Assume that, therefore, unlike connection information of an AP that is enabled in the direct connection mode, the connection information for connecting to the setup AP cannot be changed as desired by the user. In the network setup mode, the printer 103 may connect with the PC 101 via Wi-Fi Direct (WFD) instead of traditional Wi-Fi. That is, the printer 103 may operate as a group owner and receive network information from the PC 101 via WFD communication. Further, in the network setup mode, the printer 103 may be connected to the PC 101 via Bluetooth. Here, Bluetooth includes Bluetooth Classic and Bluetooth Low Energy (BLE). That is, for example, the printer 103 may operate as a slave device in BLE in the network setup mode and receive network information from the PC 101 via communication over BLE. Further, in the network setup mode, the printer 103 may be capable of executing both network setup via Wi-Fi and network setup via BLE. That is, the printer 103 may enable both Wi-Fi communication and BLE communication when it starts operating in the network setup mode. Specifically, the printer 103 may perform both enabling of the setup AP and enabling of an advertising state, in which advertisement information is transmitted via BLE so as to allow BLE connection, when it starts operating in the network setup mode. Further, the printer 103 may receive network information from the PC 101 via a wired LAN or USB.

As described above, the printer 103 operates in the network setup mode for executing network setup of the printer 103 according to predetermined conditions including a press of a button by the user or whether it is the time of initial installation. When operating in the network setup mode, the printer 103 controls the wireless LAN interface 256 and operates as a setup AP, which is enabled only during operation in the network setup mode. The setup AP is an access point that is different from an access point that is enabled during the above-described soft AP mode. Further, assume that the SSID of the setup AP includes a predetermined character string that can be recognized by a setup application (program 203) of the PC 101.

Further, assume that the printer 103 operating in the network setup mode uses a predetermined communication protocol (setup communication protocol) in communication with the PC 101 connected with the setup AP. The setup communication protocol is, more specifically, Simple Network Management Protocol (SNMP), for example.

The printer 103 stops operation in the network setup mode and disables the setup AP after a predetermined period of time has elapsed after starting operation in the network setup mode. The setup AP is also disabled when connection information for connecting to an external AP and an instruction to change the wireless communication operation mode are received from the PC 101 during the network setup mode.

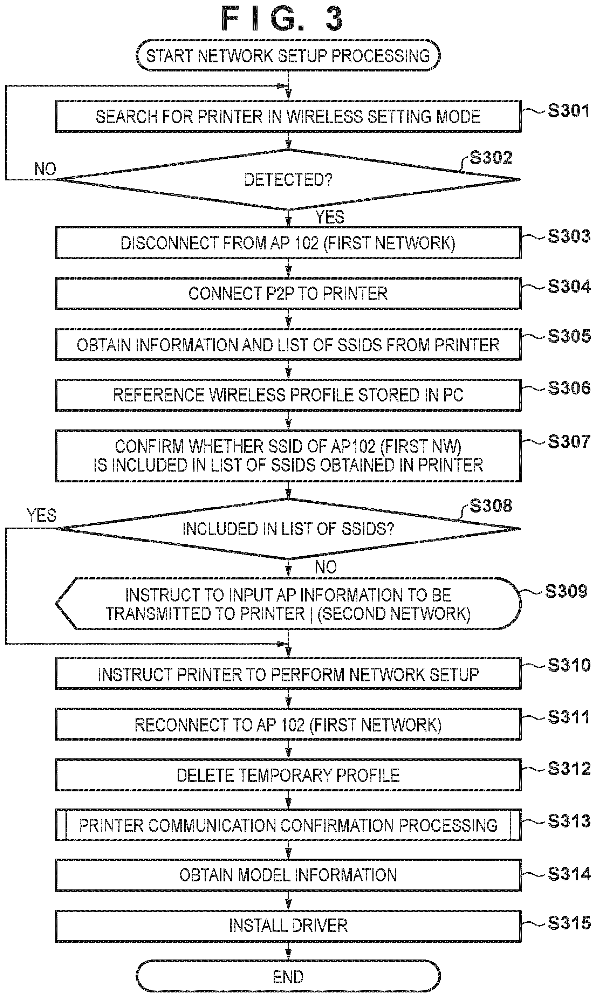

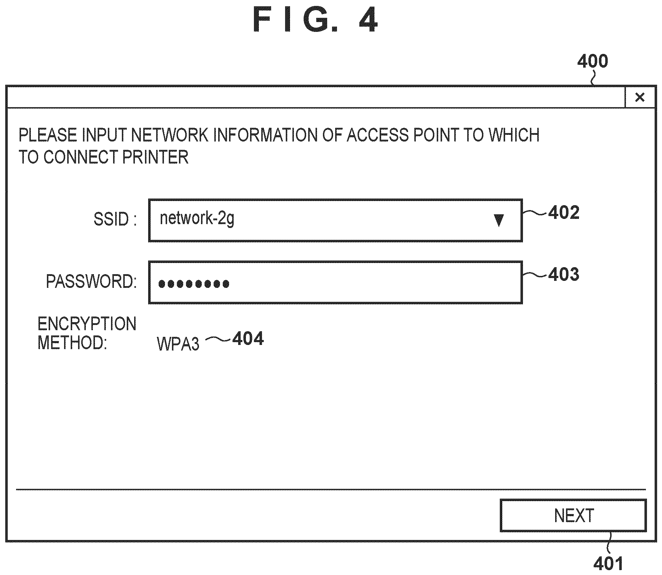

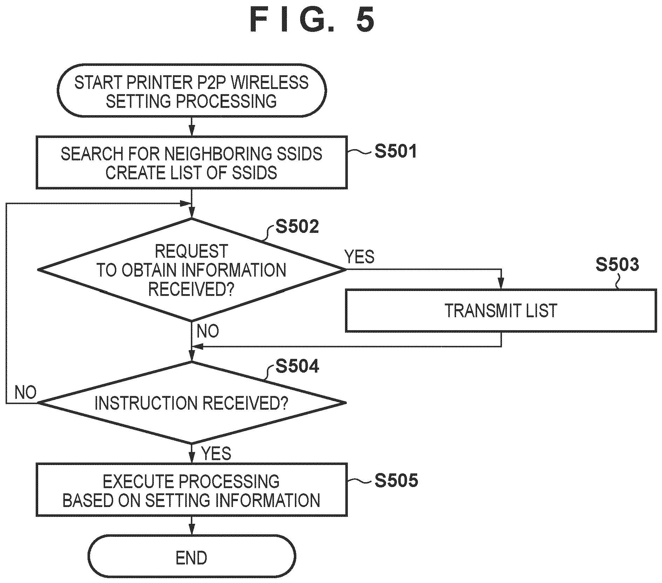

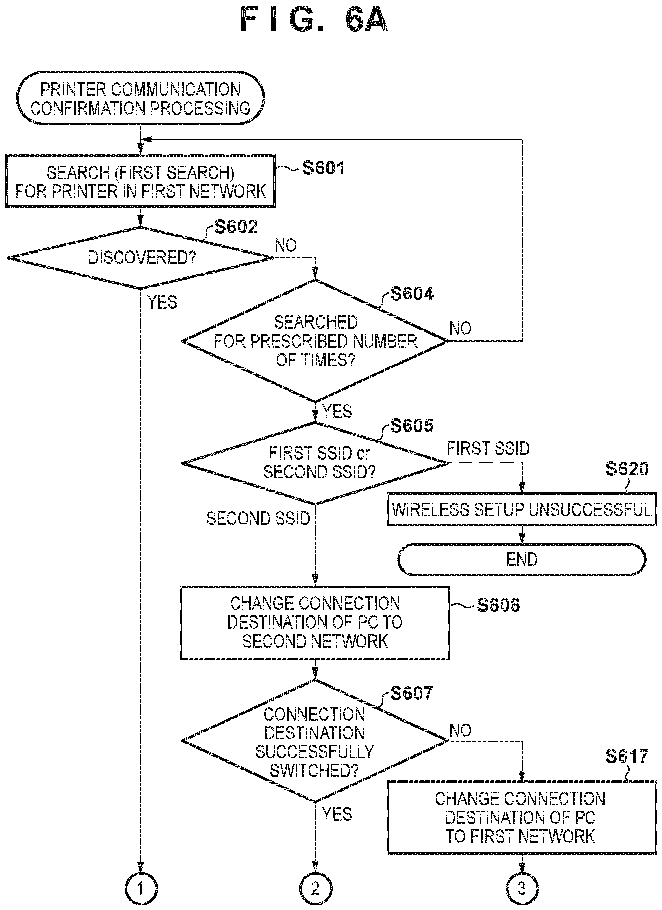

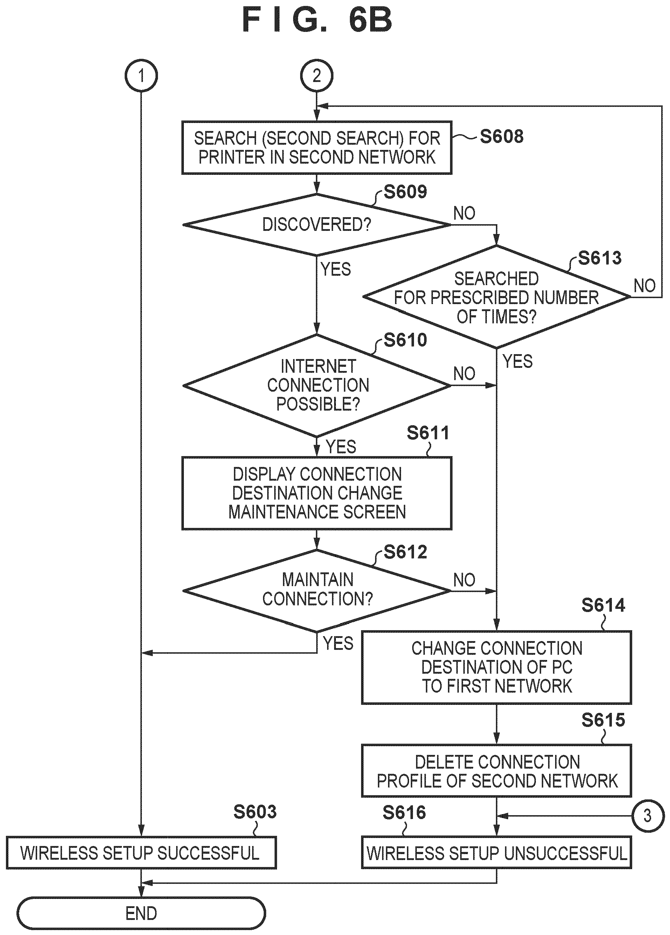

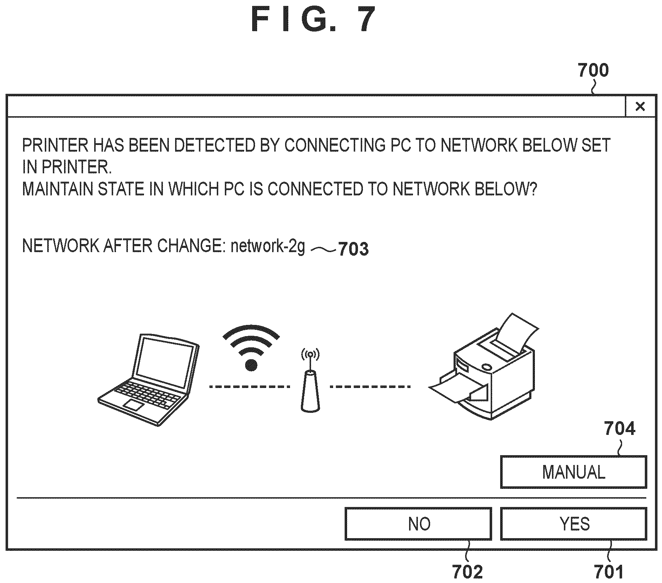

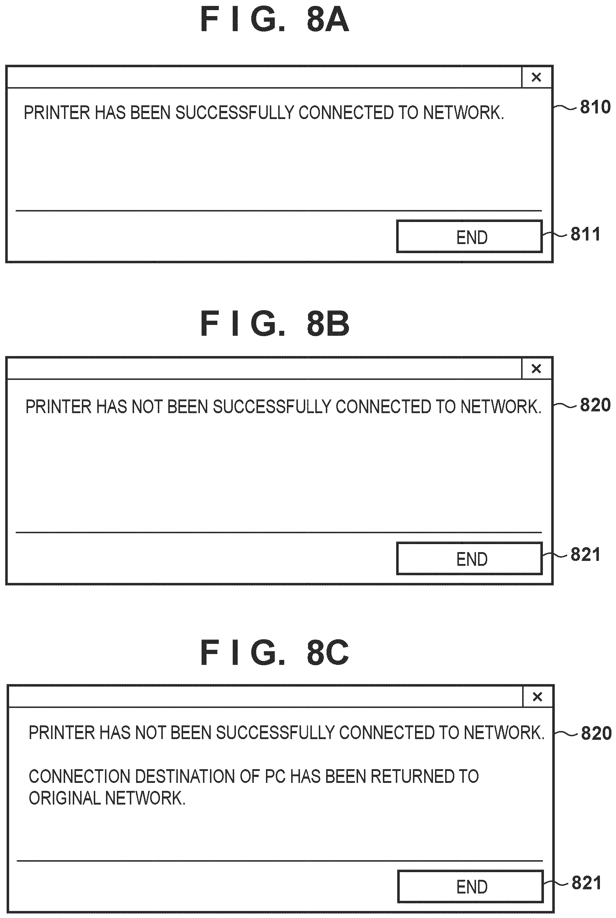

The operation of the present embodiment will be described in detail below with reference to FIGS. 3 to 8. FIG. 3 is a flowchart for describing processing (network setup processing) in which the PC 101 connects the printer 103 to a network of an external AP. FIG. 4 is a diagram illustrating an example of a screen to be displayed on the display apparatus 208 of the PC 101 in the network setup processing. FIG. 5 is a flowchart for explaining processing to be performed by the printer 103. FIGS. 6A and 6B are flowcharts for explaining printer communication confirmation processing to be performed in step S313 of FIG. 3. FIGS. 7 and 8 are diagrams illustrating examples of screens to be displayed on the display apparatus 208 of the PC 101 in the printer communication confirmation processing of FIGS. 6A and 6B.

FIG. 3 is a flowchart for explaining network setup processing of the printer 103 executed by the PC 101. This flowchart is realized by the CPU 201 reading out a program stored in the ROM 202 to the RAM 206 and executing the program. In the present embodiment, assume that the PC 101 executes the processing using the setup application. This flowchart is started based on a predetermined instruction being performed by the user on a screen displayed by the setup application, for example. Assume that if the PC 101 is connected to the AP 102 via the wired LAN interface 210, an SSID and a password of the AP 102 is not stored in the wireless profile 204. If the PC 101 is connected to the AP 102 via the wireless LAN interface 211, the SSID and the password of the AP 102 is stored in the wireless profile 204.

By the user executing the program 203 and performing a predetermined operation in the program 203, the CPU 201 initiates network setup processing. Here, assume that the PC 101 is already connected to the external AP 102 and the printer 103 is in the network setup mode. FIG. 1B illustrates a configuration of the system at this time. In addition, a network formed by the AP 102 to which the PC 101 is connected will be referred to as a "first network" below. In other words, a connection with an AP corresponds to a connection with a network formed by an AP. Similarly, an SSID that is an identifier of the first network will be referred to as a "first SSID" below. Specifically, for example, the first SSID is an SSID of the AP 102 to which the PC 101 is connected. In other words, the first network is a network to which the PC 101 was connected at a timing at which at least the above predetermined operation was received.

In step S301, the CPU 201 searches for the printer 103 in the network setup mode. Specifically, for example, the CPU 201 searches for access points around the PC 101 and obtains SSIDs of the discovered access points. Then, in step S302, the CPU 201 determines whether a unique SSID known by the setup application is included in the discovered SSIDs. The unique SSID is an SSID emitted by an access point of the printer 103 in the network setup mode. The processing of steps S301 and S302 is repeated until it is determined that the unique SSID is included in the discovered SSIDs. If it is determined that the unique SSID is included in the discovered SSIDs, the processing proceeds to step S303.

In step S303, the CPU 201 stores setting information of the AP 102 to which the wireless LAN interface 211 is connected in the memory. Then, the CPU 201 disconnects the wireless connection between the wireless LAN interface 211 and the AP 102 and, in step S304, establishes a wireless direct connection with the printer 103. Specifically, the CPU 201 connects the wireless LAN interface 211 to the unique SSID of the AP. If the PC 101 is connected by a wire to the AP 102 via the wired LAN interface 210, that is, the PC 101 is not wirelessly connected to the AP 102, the processing of step S303 is skipped. Further, in a form in which the PC 101 performs various kinds of communication with the printer 103 using a communication method (Bluetooth, wired LAN, USB, etc.) other than Wi-Fi, the wireless connection between the wireless LAN interface 211 and the AP 102 need not be disconnected.

In step S305, the CPU 201 requests the printer 103 for a list of SSIDs of APs around the printer 103 and receives a list of SSIDs from the printer 103 as a response to the request. The list of SSIDs received here is a list of SSIDs of neighboring APs detected (discovered) by the printer 103. In other words, the list of SSIDs can be said to be a list of APs detected (discovered) by the printer 103. Further, in other words, it can also be said to be a list of networks detected (discovered) by the printer 103. The request for a list of SSIDs and the list of SSIDs are communicated via a wireless direct connection but may be communicated using a communication method (Bluetooth, wired LAN, USB, etc.) other than Wi-Fi.

In step S306, the CPU 201 obtains the wireless profile 204 stored in the PC 101. If there are a plurality of networks to which the PC 101 had connected in the past and there are a plurality of wireless profiles, a plurality of wireless profiles are obtained. Then, the setting information (including the SSID) of the AP 102 which was connected at the start of the network setup process and a wireless connection with which has been disconnected in step S303, is identified and obtained from the obtained wireless profiles.

In step S307, the CPU 201 confirms the list of SSIDs obtained in step S305 based on the SSID (first SSID) of the AP 102 obtained in step S306. In step S308, the CPU 201 determines whether the first SSID of the AP 102 is included in the list of SSIDs obtained in step S305 as a result of the confirmation. The determination as to whether the first SSID of the AP 102 is included in the list of SSIDs obtained in step S305 is, in other words, determination as to whether information corresponding to the network formed by the AP 102 is included in the list of SSIDs obtained in step S305.

If it is determined that the first SSID of the AP 102 is included in the list of SSIDs obtained in step S305, the CPU 201 sets the setting information (including the first SSID and password) of the AP 102 to be a target of a network setup instruction to be transmitted to the printer 103. That is, by automatically, without a user operation, selecting the setting information of the AP 102 that was connected to the PC 101 at the start of the network setup processing, the user can skip the operation of selecting or inputting setting information (including an SSID and a password) of an AP to which to connect the printer 103. Meanwhile, if it is determined in step S308 that the first SSID of the AP 102 is not included in the list of SSIDs obtained in step S305, in step S309, the CPU 201 prompts the user to input and instruct setting information (including an SSID and a password) of a desired AP.

For example, if the PC 101 is connected to the AP 102 via the wired LAN interface 210, there will be no wireless profile. In such a case, in step S308, it is determined that the first SSID of the AP 102 is not included in the list of SSIDs obtained in step S305, and the processing proceeds to step S309.

Further, for example, assume a case where the PC 101 designates a 5-GHz frequency band SSID (first SSID) and connects to the AP 102, while the printer 103 only supports wireless LAN communication in the 2.4-GHz frequency band. That is, in such a case, the printer 103 does not support wireless LAN communication in the 5-GHz frequency band. A printer that does support wireless LAN communication in the 5-GHz frequency band will be referred to as a 5-GHz-incompatible printer below. In some cases, a plurality of APs, each using a different frequency band, are enabled in a wireless LAN router in which the AP 102 is enabled, and in such cases, in step S305, the 5-GHz-incompatible printer only detects a 2.4-GHz frequency band SSID and transmits it to the PC 101 in a list of SSIDs. The PC 101 holds a wireless profile related to the 5-GHz frequency band SSID but does not hold a wireless profile related to the 2.4-GHz frequency band SSID. Therefore, in step S308, it is determined that the first SSID of the AP 102 is not included in the list of SSIDs obtained in step S305, and the processing proceeds to step S309.

If the processing proceeds to step S309, it is necessary that the user designates setting information of an AP, such as an SSID and a password, on the PC 101 for an AP that the user desires, that is, an AP to which to connect the printer 103. In step S309, the CPU 201 displays a network information input screen 400 as illustrated in FIG. 4 on the display apparatus 208. The network information input screen 400 includes a "next" button 401, a drop-down list 402 for accepting selection of an "SSID name", an input region 403 for inputting a "password", and an encryption method display region 404 for displaying an encryption method of the selected SSID. The drop-down list 402 lists information of the list of SSIDs obtained in step S305 from the printer 103. That is, the network information input screen 400 can be said to be a selection screen for displaying a list of SSIDs obtained from the printer 103 and accepting selection of the user from the list of SSIDs. When an SSID is selected from the drop-down list 402, the encryption method display region 404 displays encryption method information obtained from the printer 103 as ancillary information related to that SSID. If there is a wireless profile corresponding to the SSID selected from the drop-down list 402 in the wireless profiles obtained in step S306, the CPU 201 may obtain a password included in that wireless profile and thereby omit acceptance of input of a password in the input region 403. In the present embodiment, selection of an SSID using the drop-down list 402 has been described as an example, but the present invention is not limited thereto. For example, instead of the drop-down list 402, a configuration may be taken so as to allow the user to input an arbitrary SSID name. Further, a configuration may be taken so as to allow the user to select an arbitrary encryption method in the encryption method display region 404.

The password input region 403 is a region for accepting input of a password character string for connecting to a selected SSID. A password is a key used for encryption with an encryption method displayed in the encryption method display region 404. Regarding the password input region 403, an inputted password is replaced with another character such as "•" so that it cannot be seen from the outside in terms of security and displayed on the screen. However, in order to allow the user to confirm the inputted characters, the network information input screen 400 may constitute a UI (not illustrated) for switching to display the password character string as inputted characters. If an encryption method of an AP is not set, that is, if it is an open authentication network, the password input region 403 may be deactivated as input is unnecessary.

The network information input screen 400 is a screen that guides the user to input network information for connecting the printer 103 to a desired AP and prompts the user to press the "next" button 401. When the user presses the "next" button 401 in accordance with the guidance of the network information input screen 400, the CPU 201 temporarily holds therein the inputted network information (SSID, password, and encryption method) as information corresponding to a wireless profile of the AP. At this time, the CPU 201 may perform processing for verifying whether the inputted network information is correct. Specifically, for example, the CPU 201 may verify that the inputted password matches a predetermined format of an encryption method. As a result of the verification, for example, if it is determines that the password and the encryption method are a combination that results in an error, the CPU 201 displays the network information input screen 400 again and prompts the user to input correct information. A network to which a connection can be established using the network information obtained by input of the user on the network information input screen 400 and which is formed by an AP corresponding to the network information will be referred to as a "second network" below. Similarly, an SSID of an AP forming the second network which is an identifier of the second network will be referred to as a "second SSID" below. For example, the second network is a network formed by the AP 104, which is an AP different from the AP 102 as illustrated in FIG. 1C. The second network is a network different from the first network formed by the AP 102.

In step S310, the CPU 201 transmits a network setup instruction to the printer 103. If it is determined in step S308 that the first SSID of the AP 102 is included in the list of SSIDs of obtained in step S305, network information of an AP with the first SSID is transmitted to the printer 103 as the network setup instruction. Further, if network information of the second network is obtained according to input of the user in step S309, the network information of an AP with the second SSID is transmitted to the printer 103 as the network setup instruction. That is, in step S310, the setting information of the AP 102, which is identified by the first SSID, or the setting information of an AP identified by the second SSID is transmitted to the printer 103. The network setup instruction is transmitted via a wireless direct connection but may be transmitted using a communication method (Bluetooth, wired LAN, USB, etc.) other than Wi-Fi. Further, in a form in which a network setup instruction is transmitted using a communication method other than Wi-Fi, the network setup instruction may be transmitted while the PC 101 is connected to the first network by Wi-Fi.

In step S311, the CPU 201 disconnects the wireless direct connection with the printer 103 and reconnects with the AP 102 to which the PC 101 was connected in the wireless connection disconnected in step S303. If the wireless profile 204 of the AP 102 is stored in the ROM 202 in the PC 101, the CPU 201 obtains that in step S311 and thereby can reconnect to the AP 102 without needing the user to re-input a password or the like. Alternatively, if the encryption method is not set in the AP 102, the CPU 201 can reconnect to the AP 102 by designating the SSID of the AP 102 without needing re-input of a password or the like. If the PC 101 is connected to the AP 102 via the wired LAN interface 210, the processing of step S311 will be skipped.

In step S312, if there is a wireless profile remaining in the ROM 202 due to temporarily having established a wireless direct connection, the CPU 201 removes the wireless profile. With the processing of step S312, it is possible to prevent a wireless profile of a connection unintended by the user from remaining.

In step S313, the CPU 201 performs printer communication confirmation processing to determine whether communication between the printer 103 and the PC 101 is possible via the network to which the PC 101 is connected. The printer communication confirmation processing of step S313 will be described later with reference to FIGS. 6A and 6B.

In step S314, the CPU 201 obtains information related to the model of the printer 103 from the printer 103 discovered in step S313 via the network to which the PC 101 is connected. Specifically, capability information, for example, is obtained from the printer 103. In step S315, the CPU 201 performs processing for installing a printer driver corresponding to the printer 103 in the PC 101 based on the information. Then, the processing of FIG. 3 ends. The CPU 201 may obtain the above printer driver from the external server 171 via the Internet. In addition, if the printer 103 is not discovered in step S313, the processing of steps S314 and S315 may be skipped.

Next, the processing of the printer 103 will be described in detail with reference to FIG. 5. This flowchart is realized by the CPU 252 reading out the program 254 stored in the ROM 253 to the RAM 258 and executing the program 254.

The CPU 252 starts the processing of FIG. 5 based on occurrence of an event that triggers a transition to the network setup mode. The event is, for example, that the user performs an operation for powering on the printer 103 in the input interface 260 of the printer 103. At this time, the printer 103 may regard the operation for powering on the printer 103 as an event that triggers a transition to the network setup mode only when the printer 103 is powered on for the first time after arrival. Further, the event is, for example, that the user performs an operation that is different from the operation for a power-on and is for transitioning to the network setup mode in the input interface 260 of the printer 103.

The printer 103 in the network setup mode operates the wireless LAN interface 256 as the access point with the unique SSID described above. For example, the unique SSID includes a character string corresponding to the model name of the printer 103 or a character string with which it is possible to deduce that it is the printer 103, such as "printer". The network setup mode is a mode in which the PC 101 can easily connect to the printer 103 without using authentication information (e.g., a password). Since the printer 103 operates as a low-security AP in the network setup mode, the network setup mode is temporarily used at the time of performing network setup of the printer 103.

In step S501, prior to causing the printer 103 to transition to the network setup mode, the CPU 252 searches for access points around the printer 103 and creates a list of SSIDs that includes SSIDs of discovered access points. The access points discovered here are access points to which the printer 103 can connect. In other words, access points to which the printer 103 cannot connect are not discovered by the search performed here. The access points to which the printer 103 cannot connect are, for example, access points using a frequency band that the printer 103 cannot use or access points using an encryption method that the printer 103 cannot use. In other words, the search for access points is a search for networks formed by access points. Thus, as described above, the list of SSIDs generated here is, in other words, a list of networks discovered by the search performed by the printer 103. In step S502, the CPU 252 causes the printer 103 to transition to the network setup mode and determines whether a request to obtain a list of SSIDs has been received from the PC 101. This processing corresponds to step S305 of FIG. 3. If it is determined in step S502 that a request to obtain a list of SSIDs has been received from the PC 101, in step S503 the CPU 252 performs processing for transmitting a list of SSIDs requested by the PC 101. Specifically, the CPU 252 transmits the list of SSIDs created in step S501 to the PC 101. If it is determined in step S502 that a request to obtain a list of SSIDs has not been received from the PC 101, the processing proceeds to step S504.

In step S504, the CPU 252 determines whether a network setup instruction has been received from the PC 101. This processing corresponds to step S310 of FIG. 3. The network setup instruction includes setting information of an AP. If is determined in step S504 that a network setup instruction has not been received, the processing from step S502 is repeated. Meanwhile, if it is determined in step S504 that a network setup instruction has been received, in step S505 the CPU 252 executes processing for connecting to an AP corresponding to the received setting information of an AP. Specifically, for example, if the setting information of an AP received from the PC 101 includes the wireless profile 204, the CPU 252 performs processing for connecting to the AP 102 using the SSID and the password included in the wireless profile 204. Further, for example, if the setting information of an AP received from the PC 101 includes the network information of the second network inputted in the PC 101 in step S309, the CPU 252 performs processing for connecting to an external AP forming the second network using the network information. After step S505, the processing of FIG. 5 ends. In the present embodiment, the processing of FIG. 5 is not limited to the order indicated in FIG. 5. The determination as to whether a network setup instruction has been received may be made prior to the determination as to whether a request to obtain a list of SSIDs has been received.

The printer communication confirmation processing of step S313 of FIG. 3 will be described with reference to FIGS. 6A and 6B.

In step S601, the CPU 201 searches for the printer 103 on the first network, which is formed by the AP 102 and to which the PC 101 belongs. Specifically, the printer 103 is searched for by transmitting a broadcast packet or a multicast packet, for example. For example, if the printer 103 and the PC 101 are connected to the same AP 102 and the security function (e.g., an SSID separating function) of the AP 102 is not enabled, a response to the packet transmitted in the search will be received from the printer 103 via the first network. That is, the printer 103 will be discovered by this search. The processing of searching for the printer 103 on the first network will be referred to as a first search below.

In step S602, the CPU 201 determines whether the printer 103 has been discovered in the first search of step S601. If it is determined that the printer 103 has been discovered, in step S603 the CPU 201 displays, on the display apparatus 208, a screen indicating that the printer 103 has been discovered by the first search of step S601. Here, for example, a screen 810 illustrated in FIG. 8A is displayed on the display apparatus 208. The screen 810 includes a message indicating that the printer 103 has been discovered and a message indicating that a connection with the printer 103 has been successfully established. Further, the screen 810 includes an end button 811 for ending the processing. If the end button 811 is pressed, the processing of FIGS. 6A and 6B ends.

Meanwhile, if it is determined that the printer 103 has not been discovered in the first search, in step S604 the CPU 201 determines whether the first search has been performed a prescribed number of times. If it is determined that the first search has not been performed a prescribed number of times, the processing from step S601 is repeated. If it is determined that the first search has been performed a prescribed number of times, the processing proceeds to step S605.

In step S605, the CPU 201 determines whether network information of an AP with the first SSID has been transmitted or network information of an AP with the second SSID has been transmitted in step S310. If it is determined that network information of an AP with the first SSID has been transmitted in step S310, the processing proceeds to step S620, and a screen indicating a network connection failure of the printer 103 of FIG. 8B is displayed on the display apparatus 208. For example, a screen 820 displays a message indicating that the printer 103 could not be discovered and a message indicating that a connection with the printer 103 has not been successfully established. The screen 820 may also include a message indicating that the connection destination of the wireless LAN interface 211 has not been successfully changed. Further, the screen 820 includes an end button 821 for ending the processing. If the end button 821 is pressed, the processing of FIGS. 6A and 6B ends. Then, when it is determined that the network information of the AP with the second SSID has been transmitted in step S310, the processing proceeds to step S606.

In step S606, the CPU 201 disconnects the connection between the wireless LAN interface 211 and the network with the first SSID and attempts to establish a connection between the wireless LAN interface 211 and the network with the second SSID. That is, the CPU 201 attempts to change the connection destination of the wireless LAN interface 211. The attempt to establish a connection between the wireless LAN interface 211 and the network with the second SSID is performed according to an instruction from the setup application in a state in which the setup application is running. Then, in step S607, the CPU 201 determines whether the connection destination of the wireless LAN interface 211 has been successfully changed. A case where the connection destination of the wireless LAN interface 211 has been successfully changed is, in other words, a case where a connection between the wireless LAN interface 211 and the network with the second SSID has been successfully established.

If it is determined that the connection destination of the wireless LAN interface 211 has not been successfully changed, in step S617 the CPU 201 causes the wireless LAN interface 211 to reconnect to the network with the first SSID. In step S616, the CPU 201 displays a screen indicating a network connection failure of the printer 103 on the display apparatus 208. In the present embodiment, network connection of the printer 103 is deemed successful based on the PC 101 discovering the printer 103 on the network as a result of the network setup processing. Here, for example, a screen 820 illustrated in FIG. 8C is displayed on the display apparatus 208. For example, the screen 820 displays a message indicating that the printer 103 could not be discovered and a message indicating that a connection with the printer 103 has not been successfully established. Further, the screen 820 displays a message indicating that the wireless LAN interface 211 has been reconnected to the network with the first SSID. The screen 820 may also include a message indicating that the connection destination of the wireless LAN interface 211 has not been successfully changed. Further, the screen 820 includes the end button 821 for ending the processing. If the end button 821 is pressed, the processing of FIGS. 6A and 6B ends.

If it is determined in step S607 that the destination of the wireless LAN interface 211 has been successfully changed, in step S608 the CPU 201 searches for the printer 103 on the second network. Specifically, the printer 103 is searched for by transmitting a broadcast packet or a multicast packet, for example. If the printer 103 and the PC 101 are connected to the same second network and the security function (e.g., an SSID separating function) of the AP 102 is not enabled, a response to the packet transmitted in the search will be received from the printer 103 via the second network. That is, the printer 103 will be discovered by this search. The processing of searching for the printer 103 on the second network will be referred to as a second search below. In addition, when the wireless LAN interface 211 is set to automatically obtain an IP address, the CPU 201 may deem that the connection destination has successfully been changed upon an IP address being assigned after connecting to the AP 102.

In step S609, the CPU 201 determines whether the printer 103 has been discovered in the second search of step S608. If it is determined that the printer 103 has not been discovered in the second search, in step S613 the CPU 201 determines whether the second search has been performed a prescribed number of times. If it is determined that the second search has not been performed a prescribed number of times, the processing from step S608 is repeated. If it is determined that the second search has been performed a prescribed number of times, the processing proceeds to step S614.

If it is determined in step S613 that the second search has been performed a prescribed number of times, in step S614, the CPU 201 disconnects the connection between the wireless LAN interface 211 and the network with the second SSID and reconnects the wireless LAN interface 211 to the network with the first SSID. The connection between the wireless LAN interface 211 and the network with the first SSID is established according to an instruction from the setup application in a state in which the setup application is activated. Further, at this time, the state may be unstable due to the OS not being able to search for a neighboring SSID immediately after the connection has been disconnected, and so, reconnection may be unsuccessful. Therefore, the CPU 201 may re-establish a connection after a certain period of time has elapsed from when the connection was disconnected. Alternatively, connection failures may be reduced by retrying the reconnection processing when reconnection is unsuccessful. Then, in step S615, the CPU 201 deletes the wireless profile (including the second SSID and the password) of the second network and, in step S616, displays a screen indicating a network connection failure of the printer 103 of FIG. 8C on the display apparatus 208. With the processing of step S615, it is possible to prevent a wireless profile of a connection unintended by the user from remaining. If an end button 821 of the screen 820 illustrated in FIG. 8C is pressed, the processing of FIGS. 6A and 6B ends.

If it is determined in step S609 that the printer 103 has been discovered in the second network, in step S610 the CPU 201 determines whether the PC 101 is in a state in which it can connect to the Internet, that is, whether the PC 101 can access the external server 171. Specifically, for example, the CPU 201 first executes an Application Programming Interface (API) of the OS, which is an API for confirming whether the PC 101 is in a state in which it can connect to the Internet. Then, by referencing a result obtained by executing that API, it is determined whether the PC 101 is in a state in which it can connect to the Internet. In the present embodiment, the execution of the API and the determination as to whether the PC 101 is in a state in which it can connect to the Internet are performed after the search in step S608 has ended and not in parallel with the search in step S608. In addition, when the above-described API is executed, if the PC 101 is in a state in which it can connect to the Internet via the second network, a result that the PC 101 is in a state in which it can connect to the Internet will, of course, be outputted. However, when the above-described API is executed, even if the PC 101 is in a state in which it can connect to the Internet via a network other than the second network, a result that the PC 101 is in a state in which it can to connect to the Internet will be outputted. That is, for example, if the PC 101 has established a connection with the second network by a wireless LAN and a connection with another network by a wired LAN, a result that the PC 101 is in a state in which it can connect to the Internet will be outputted in a state in which the PC 101 can connect to the Internet via the other network but cannot connect to the Internet via the second network. If it is determined that the PC 101 is not in a state in which it can connect to the Internet, in step S614 the CPU 201 disconnects the connection between the wireless LAN interface 211 and the network with the second SSID and causes the wireless LAN interface 211 to reconnect to the network with the first SSID. Hereinafter, the processing of steps S614 to S616 will be the same as described above. With the determination processing of step S610, it is possible to prevent the printer driver from the external server 171 based on the model information obtainment processing of step S314, which is performed after the end of the processing of FIGS. 6A and 6B, from not being successfully obtained. The processing of step S610 need not necessarily be performed after the processing of step S609 and may be performed at a timing at which the external server 171 is accessed, for example. In the present embodiment, as described above, a form in which the determination of step S610 is performed and the processing is branched based on a result of the determination of step S610 has been described, but the present invention is not limited to this form. A form in which the determination of step S610 is omitted may be taken. Specifically, for example, a form in which if a result of the determination of step S609 is YES, the processing always proceeds to step S611 without the determination of step S610 being performed may be taken.

If it is determined in step S610 that the PC 101 is in a state in which it can connect to the Internet, in step S611 the CPU 201 displays, on the display apparatus 208, a confirmation screen for confirming with the user whether to maintain the connection between the network (second network) to which the connection destination has been changed and the PC 101. Here, for example, a confirmation screen 700 illustrated in FIG. 7 is displayed on the display apparatus 208. For example, the confirmation screen 700 includes a message indicating that the printer 103 has been discovered on the second network, a message indicating that the wireless LAN interface 211 has been connected to the network with the second SSID, and a region 703 for displaying the second SSID. Further, for example, the confirmation screen 700 includes a "manual" button 704 for displaying a manual indicating a detailed description, and a "yes" button 701 and a "no" button 702, either of which is to be operated by the user in response to the contents of the message.

When the connection between the PC 101 and the second network is maintained, the PC 101 may not be able to execute communication with other external devices connected to the first network. Therefore, when the "manual" button 704 included in the confirmation screen 700 is pressed, description of precautions against keeping the network to which the PC 101 is connected as changed is displayed as a web manual, which is Internet content, by a web browser or the like. Specifically, for example, the content includes a description that communication with an external device connected to the first network may be interrupted by keeping the PC 101 connected to the second network as changed. Although an example of display by a press of the "manual" button 704 has been described, the present invention is not limited thereto. For example, the content may be displayed so as to be embedded in the confirmation screen 700. Alternatively, a message corresponding to the details of the content may be displayed on the confirmation screen 700. The confirmation screen 700 is a screen that displays a message to confirm with the user whether to maintain the state in which the PC 101 is connected to the second network and prompts the user to press either the "yes" button 701 or the "no" button 702. In other words, the confirmation screen 700 can be said to be a selection screen capable of accepting a user instruction as to whether to connect the PC 101 to the first network or the second network. Further, in other words, the confirmation screen 700 is a screen for prompting the user to confirm whether to switch to the connection between the network (first network), which was the connection destination before the change, and the PC 101.

In step S612, the CPU 201 determines whether to maintain the connection to the second network. Specifically, for example, when the user presses the "yes" button 701, the CPU 201 determines to maintain the connection of the wireless LAN interface 211 to the second network and, in step S603, displays the screen illustrated in FIG. 8A on the display apparatus 208. If the end button 811 included in the screen 810 is pressed, the processing of FIGS. 6A and 6B ends. In such a case, even when the operation for ending the processing of FIGS. 6A and 6B is accepted, the connection of the wireless LAN interface 211 to the second network is maintained. In other words, even when the operation for ending the processing of FIGS. 6A and 6B is accepted, a switch of the wireless LAN interface 211 from the second network to the first network is not performed. Meanwhile, when the user presses the "no" button 702, the CPU 201 determines not to maintain the connection of the wireless LAN interface 211 to the second network and advances to step S614. Hereinafter, the processing of steps S614 to S616 will be the same as described above.

In the processing of FIGS. 6A and 6B, the determination processing of steps S604 and S613 may be performed according to a condition as to whether the processing time for which the first search and the second search are executed has reached a prescribed amount of time (e.g., a predetermined number of seconds) instead of the determination condition as to whether the number of times the first search and the second search have been executed has reached a prescribed number of times. In this case, the first search and the second search are repeatedly performed in steps S601 and S608 until a certain period of time has elapsed. In addition, the conditions in steps S604 and S613 need not be the same. That is, the determination for one of the searches may be made based on the condition as to whether a prescribed number of times has been reached, and the determination for the other search may be made based on the condition as to whether a prescribed number of seconds has been reached.

In addition, when the first search is being performed, the printer 103 may be executing processing for connecting to an AP based on setting information of the AP transmitted from the PC 101. Therefore, it is necessary to determine a threshold for the first search in consideration of the time required for the processing being performed by the printer 103. Meanwhile, regarding the second search, since the search is performed after a sufficient time has elapsed, it is highly likely that the printer 103 has already completed the connection to the second network, and there is no need to determine a threshold in consideration of the time it takes for the printer 103 to connect to the AP 102. Therefore, the threshold for the second search is smaller in number than the threshold for the first search or shorter in time than the threshold for the first search. With this, it is possible to keep the processing time of FIGS. 6A and 6B to a minimum.

Further, a configuration may be taken so as to, if it is determined in step S610 that it is not possible to connect to the Internet even though the AP with the second SSID is connected, not display the screen of FIG. 8C but first display a screen for prompting the user to confirm whether to continue the network setup processing in a state in which it is not possible to connect to the Internet. For example, a continuation confirmation screen (not illustrated), such as "No Internet connection. Continue processing?", is displayed and an instruction to continue processing is accepted on the screen, and thereby, the user can cause the processing to be continued in a state in which the network with the second SSID is connected even if there is no Internet connection.

In the present embodiment, a configuration in which the PC 101 obtains the printer driver from the external server 171 via the Internet after establishing communication with the printer 103 has been described as an example. The determination of step S610 as to whether Internet connection is possible is performed in FIGS. 6A and 6B, but the present invention is not limited thereto. For example, a configuration may be taken so as to perform processing of step S610 immediately before accessing the external server 171 to determine whether Internet connection is possible. A configuration may be taken so as to, if it is determined at this time that Internet connection is not possible, temporarily switch to the network with the first SSID to access the external server 171.

As described above, in the present embodiment, if communication with the printer 103 is possible when the PC 101 is connected to the second network, the user is first prompted to confirm whether to change to the second network. Thus, only when the user permits a change to the second network, the connection destination of the PC 101 is changed from the first network to the second network. Therefore, it is possible to prevent a case such as that in which the communication between the PC 101 and the printer 103 is no longer performed as a result of the connection destination network being automatically changed and thus a switch to the original network needs to be performed, and thereby, convenience can be improved. Furthermore, the PC 101 can establish a state in which it can communicate with the printer 103 on the second network and end the network setup processing. With this, for example, it is possible to successfully perform print processing without an error when the user executes processing, such as performing a print instruction to the printer 103, after the network setup process is completed. Furthermore, when changing the connection destination of the PC 101 from the first network to the second network, it is indicated to the user that the connection with an external device on the first network may be interrupted, thereby making it possible to prevent a case where a change is made without the user recognizing a possibility of that interruption.

### [Second Embodiment]

A second embodiment will be described below on points of difference from the first embodiment. In the present embodiment, when the printer 103 is discovered in the second search, the connection destination of the PC 101 is returned to the first network prior to the confirmation screen being displayed. Then, the confirmation screen is displayed, and the user is prompted to select a network to which to connect the PC 101. With this, a network to which the PC is connected is switched to a network to which the printer is connected only when the user determines that the network to which the PC is connected may be changed. That is, it is possible to prevent a situation such as that in which the network to which the PC is connected is automatically switched without the user's intention and communication with the printer, which is connected to a network with a different SSID, cannot be performed. Further, it is possible to prevent a case where the network setup processing is ended in a state in which the connection destination network remains changed even if the user interrupts the network setup processing.

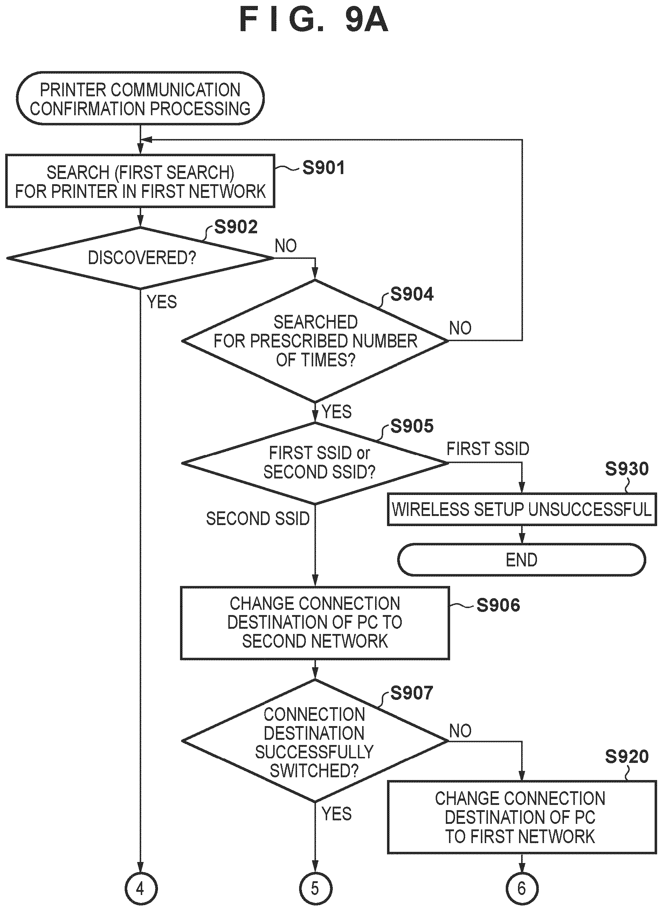

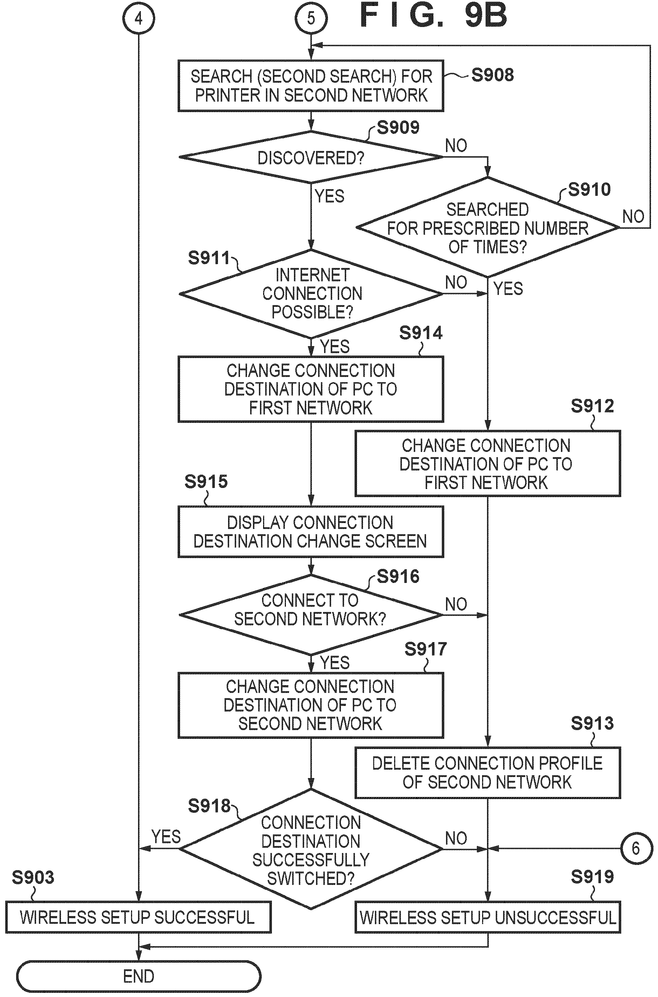

The printer communication confirmation processing of step S313 according to the present embodiment will be described with reference to FIGS. 9A and 9B. The processing of FIGS. 9A and 9B is realized by the CPU 201 reading out a program stored in the ROM 202 to the RAM 206 and executing the program, for example. The processing of FIGS. 9A and 9B is realized by the setup application. Further, the processing of FIGS. 9A and 9B is started based on a predetermined instruction being performed by the user on a screen displayed by the setup application, for example.

Since description for steps S901 to S911 and S930 is the same that for steps S601 to S610, S613, and S620 of FIGS. 6A and 6B, the description thereof will be omitted.

If it is determined in step S907 that the connection destination of the wireless LAN interface 211 has not been successfully changed, in step S920 the CPU 201 causes the wireless LAN interface 211 to reconnect to the network with the first SSID. Then, in step S919, the CPU 201 displays a screen indicating a network connection failure of the printer 103 on the display apparatus 208. Here, for example, the screen 820 illustrated in FIG. 8C is displayed on the display apparatus 208. If the end button 821 of the screen 820 is pressed, the processing of FIGS. 9A and 9B ends.

If it is determined in step S910 that the second search has been performed a prescribed number of times, in step S912, the CPU 201 disconnects the connection between the wireless LAN interface 211 and the network with the second SSID and reconnects the wireless LAN interface 211 to the network with the first SSID. The connection between the wireless LAN interface 211 and the network with the first SSID is established according to an instruction from the setup application in a state in which the setup application is activated. Further, at this time, the state may be unstable due to the OS not being able to search for a neighboring SSID immediately after the connection has been disconnected, and so, reconnection may be unsuccessful. Therefore, the CPU 201 may re-establish a connection after a certain period of time has elapsed from when the connection was disconnected. Alternatively, connection failures may be reduced by retrying the reconnection processing when reconnection is unsuccessful. Then, in step S913, the CPU 201 deletes the wireless profile (including the second SSID and the password) of the second network and, in step S919, displays the screen indicating a network connection failure of the printer 103 of FIG. 8C on the display apparatus 208. With the processing of step S913, it is possible to prevent a wireless profile of a connection unintended by the user from remaining. If the end button 821 of the screen 820 illustrated in FIG. 8C is pressed, the processing of FIGS. 9A and 9B ends.

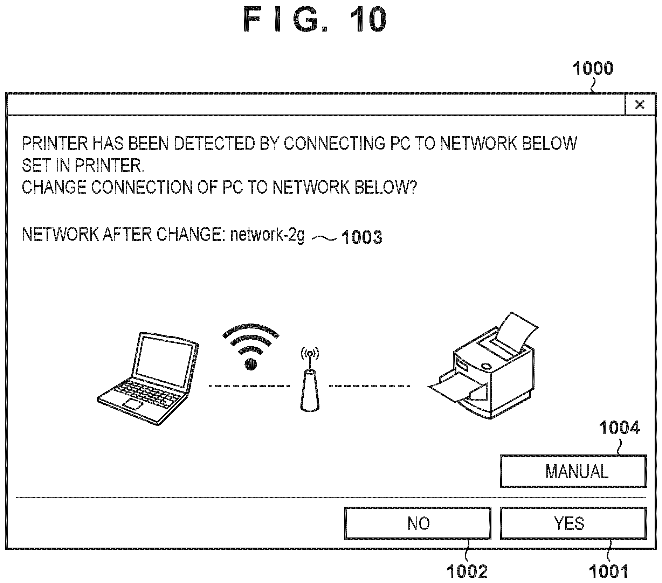

If it is determined in step S911 that Internet connection is not possible, the processing from step S912 described above will be performed. Meanwhile, if it is determined in step S911 that Internet connection is possible, in step S914 the CPU 201 disconnects the connection between the wireless LAN interface 211 and the network with the second SSID and causes the wireless LAN interface 211 to reconnect to the network with the first SSID. Then, in step S915, the CPU 201 displays a confirmation screen for prompting confirmation as to whether to change the connection destination network on the display apparatus 208. Here, for example, a selection screen 1000 illustrated in FIG. 10 is displayed on the display apparatus 208. For example, the confirmation screen 1000 includes a message indicating that the printer 103 has been discovered on the second network, a message prompting to confirm the change of the connection destination of the wireless LAN interface 211 to the network with the second SSID, and a region 1003 for displaying the second SSID. Further, for example, the confirmation screen 1000 includes a "manual" button 1004 for displaying a manual indicating a detailed description, and a "yes" button 1001 and a "no" button 1002, either of which is to be operated by the user in response to the contents of the message.

When the PC 101 is connected to the second network, the PC 101 may not be able to execute communication with other external devices connected to the first network. Therefore, when the "manual" button 1004 included in the confirmation screen 1000 is pressed, description of precautions against changing the network to which the PC 101 is connected is displayed as a web manual, which is Internet content, by a web browser or the like. This description is the same as the description to be displayed when the "manual" button 704 of FIG. 7 is pressed. The confirmation screen 1000 is a screen that displays a message to confirm with the user whether to change the PC 101 to connect to the second network and prompts the user to press either the "yes" button 1001 or the "no" button 1002. In other words, the confirmation screen 1000 can be said to be a selection screen capable of accepting a user instruction as to whether to connect the PC 101 to the first network or the second network from the user. Further, in other words, the confirmation screen 1000 is a screen for prompting the user to confirm whether to switch to the connection between the network (second network), which was the connection destination before the change, and the PC 101.

In step S916, the CPU 201 determines whether to change the connection destination of the wireless LAN interface 211 to the second network. Specifically, for example, when the user presses the "yes" button 1001, the CPU 201 determines to change the connection destination of the wireless LAN interface 211 to the second network and, in step S917, attempts to change the connection destination of the wireless LAN interface 211 to the network with the second SSID. Then, in step S918, the CPU 201 determines whether the connection destination of the wireless LAN interface 211 has been successfully changed.

If it is determined in step S918 that the destination of the wireless LAN interface 211 has been successfully changed, in step S903 the CPU 201 displays the screen illustrated in FIG. 8A on the display apparatus 208. If the end button 811 of the screen 810 is pressed, the processing of FIGS. 9A and 9B ends. Meanwhile, if it is determined that the connection destination of the wireless LAN interface 211 has not been successfully changed, in step S919 the CPU 201 displays the screen 820 of FIG. 8B indicating a network connection failure of the printer 103 on the display apparatus 208. If the end button 821 of the screen 820 illustrated in FIG. 8B is pressed, the processing of FIGS. 9A and 9B ends. A configuration may be taken so as to, if it is determined in step S918 that the connection destination of the wireless LAN interface 211 has not been successfully changed, change the connection destination of the PC to the first network and display the screen 820 of FIG. 8C on the display apparatus 208.

Step S916 is referred to again. For example, when the user presses the "no" button 1002, in step S916 the CPU 201 determines not to change the connection destination of the wireless LAN interface 211 to the second network. Then, in step S913, the CPU 201 deletes the wireless profile (including the second SSID and the password) of the second network and, in step S919, displays the screen indicating a network connection failure of the printer 103 of FIG. 8B on the display apparatus 208. If the end button 821 of the screen 820 illustrated in FIG. 8B is pressed, the processing of FIGS. 9A and 9B ends.

A configuration may be taken so as not to keep the wireless profile at the time of connection in the processing for connecting the wireless LAN interface 211 to the second network in step S905. Specifically, the above control is performed, for example, by allowing designation as to whether to hold a wireless profile used for connecting to an AP in the OS. If it is designated not to hold a wireless profile used for connecting to an AP in the OS and, in step S906, the wireless LAN interface 211 is connected to the second network, the processing for deleting the wireless profile of the second network in step S913 need not be executed.

As described above, according to the present embodiment, the connection destination of the wireless LAN interface 211 is returned to the original first network prior to step S915. Therefore, it is possible to prevent ending the processing in a state in which the connection destination network remains changed even if the user interrupts the network setup processing in step S915, for example.

### [Third Embodiment]

A third embodiment will be described below on points of difference from the first and second embodiments. In the present embodiment, the user is prompted to select a network to which to connect the PC 101 prior to the execution of the second search. With this, it is possible to prevent the PC 101 from being connected, even if it is temporary, to the second network without the user's intention when a network administrator has intentionally restricted devices to be connected to the second network, for example.

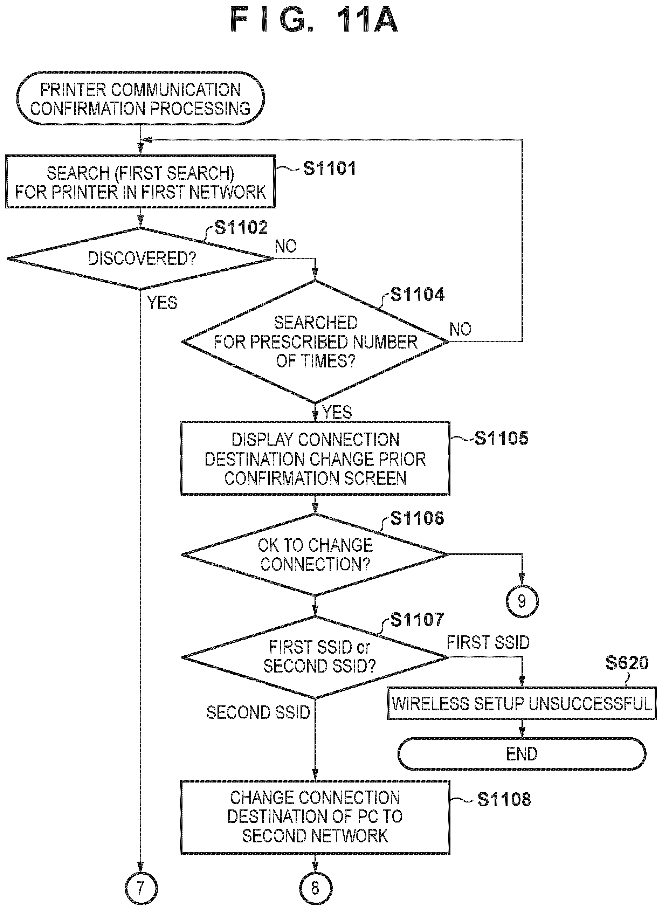

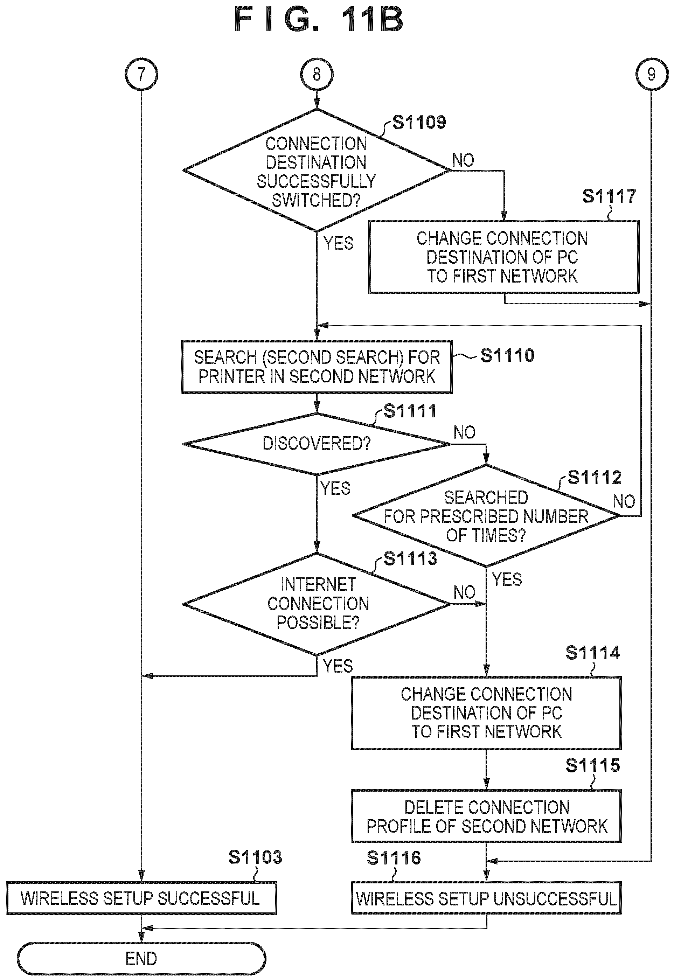

The printer communication confirmation processing of step S313 according to the present embodiment will be described with reference to FIGS. 11A and 11B. The processing of FIGS. 11A and 11B is realized by the CPU 201 reading out a program stored in the ROM 202 to the RAM 206 and executing the program, for example. The processing of FIGS. 11A and 11B is realized by the setup application. Further, the processing of FIGS. 11A and 11B is started based on a predetermined instruction being performed by the user on a screen displayed by the setup application, for example.

Since description for steps S1101 to S1104 is the same as that for steps S601 to S604 of FIGS. 6A and 6B, the description thereof will be omitted.

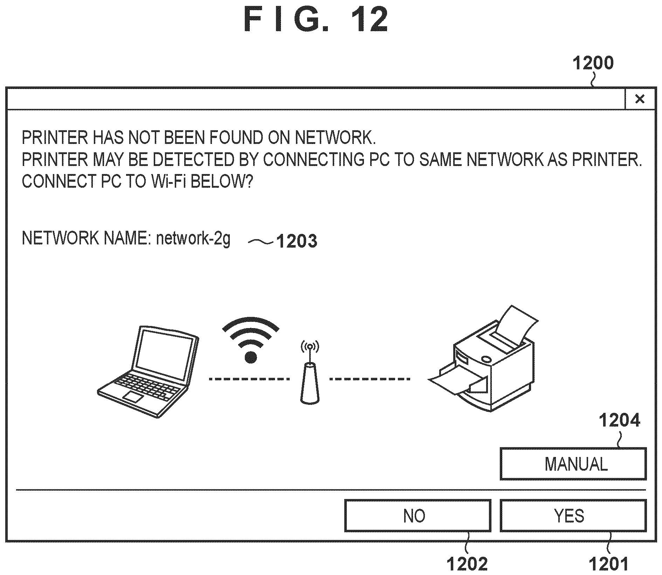

If it is determined in step S1104 that the first search has been performed a prescribed number of times, in step S1105 the CPU 201 displays a prior confirmation screen for prompting confirmation of a change of the connection destination network on the display apparatus 208. Here, for example, a prior confirmation screen 1200 illustrated in FIG. 12 is displayed on the display apparatus 208. For example, the prior confirmation screen 1200 includes a message indicating that the printer 103 has not been discovered on the first network, a message indicating that it may be possible to detect the printer by changing the connection destination of the wireless LAN interface 211 to the network with the second SSID, and a region 1203 for displaying the second SSID. Further, for example, the prior confirmation screen 1200 includes a "manual" button 1204 for displaying a manual indicating a detailed description, and a "yes" button 1201 and a "no" button 1202, either of which is to be operated by the user in response to the contents of the message.

When the PC 101 is connected to the second network, the PC 101 may not be able to execute communication with other external devices connected to the first network. Therefore, when the "manual" button 1204 included in the prior confirmation screen 1200 is pressed, description of precautions against changing the network to which the PC 101 is connected is displayed by a web browser or the like. This description is the same as the description to be displayed when the "manual" button 704 of FIG. 7 is pressed. The prior confirmation screen 1200 is a screen that displays a message to confirm with the user whether to change the PC 101 to connect to the second network and prompts the user to press either the "yes" button 1201 or the "no" button 1202. In other words, the prior confirmation screen 1200 can be said to be a selection screen capable of accepting a user instruction as to whether to connect the PC 101 to the first network or the second network from the user. Further, in other words, the prior confirmation screen 1200 is a screen for prompting the user to confirm whether to switch to the connection between the network (second network), which is the connection destination after the change, and the PC 101.

In step S1106, the CPU 201 determines whether to change the connection destination of the wireless LAN interface 211 to the second network. Specifically, for example, when the user presses the "no" button 1202, the CPU 201 determines not to change the connection destination of the wireless LAN interface 211 to the second network. Then, in step S1116, the CPU 201 displays the screen 820 illustrated in FIG. 8B on the display apparatus 208. If the end button 821 of the screen 820 is pressed, the processing of FIGS. 11A and 11B ends.

Meanwhile, when the user presses the "yes" button 1201, the CPU 201 determines to change the connection destination of the wireless LAN interface 211 to the second network. Then, in step S1107, the CPU 201 determines whether the network information of the AP with the first SSID has been transmitted or the network information of the AP with the second SSID has been transmitted in step S310. If it is determined that the network information of the AP with the first SSID has been transmitted in step S310, the processing proceeds to step S1120, and the screen indicating a network connection failure of the printer 103 of FIG. 8B is displayed on the display apparatus 208. If the end button 821 is pressed, the processing of FIGS. 11A and 11B ends. Then, when it is determined that the network information of the AP with the second SSID has been transmitted in step S310, the processing proceeds to step S1108.

In step S1108, the CPU 201 disconnects the connection between the wireless LAN interface 211 and the network with the first SSID and attempts to establish a connection between the wireless LAN interface 211 and the network with the second SSID. The attempt to establish a connection between the wireless LAN interface 211 and the network with the second SSID is performed according to an instruction from the setup application in a state in which the setup application is running. Then, in step S1109, the CPU 201 determines whether the connection destination of the wireless LAN interface 211 has been successfully changed. A case where the connection destination of the wireless LAN interface 211 has been successfully changed is, in other words, a case where a connection between the wireless LAN interface 211 and the network with the second SSID has been successfully established.

If it is determined in step S1109 that the connection destination of the wireless LAN interface 211 has not been successfully changed, in step S1117 the CPU 201 causes the wireless LAN interface 211 to reconnect to the network with the first SSID and displays a screen indicating a network connection failure of the printer 103 on the display apparatus 208. If the end button 821 of the screen 820 illustrated in FIG. 8C is pressed, the processing of FIGS. 11A and 11B ends.

If it is determined in step S1109 that the destination of the wireless LAN interface 211 has been successfully changed, in step 51110 the CPU 201 searches for the printer 103 on the second network. Specifically, the printer 103 is searched for by transmitting a broadcast packet or a multicast packet, for example.

In step S1111, the CPU 201 determines whether the printer 103 has been discovered in the second search of step S1110. If it is determined that the printer 103 has not been discovered in the second search, in step S1112 the CPU 201 determines whether the second search has been performed a prescribed number of times. If it is determined that the second search has not been performed a prescribed number of times, the processing from step S1110 is repeated. If it is determined that the second search has been performed a prescribed number of times, the processing proceeds to step S1114.

In step S1114, the CPU 201 disconnects the connection between the wireless LAN interface 211 and the network with the second SSID and reconnects the wireless LAN interface 211 to the network with the first SSID. Then, in step S1115, the CPU 201 deletes the wireless profile (including the second SSID and the password) of the second network and, in step S1116, displays the screen indicating a network connection failure of the printer 103 of FIG. 8C on the display apparatus 208. With the processing of step S1115, it is possible to prevent a wireless profile of a connection unintended by the user from remaining. If the end button 821 of the screen 820 illustrated in FIG. 8C is pressed, the processing of FIGS. 11A and 11B ends.

If it is determined in step S1111 that the printer 103 has been discovered in the second search, in step S1113, the CPU 201 determines whether Internet connection is possible via the second network, that is, whether an access to the external server 171 is possible. Description for step S1111 is the same as that for step S610 of FIGS. 6A and 6B. If it is determined that Internet connection is not possible, the processing of steps S1114 to S1116 described above will be performed.

If it is determined in step S1113 that Internet connection is possible, the display apparatus 208 displays the screen 810 illustrated in FIG. 8A. If the end button 811 of the screen 810 is pressed, the processing of FIGS. 11A and 11B ends.

As described above, according to the present embodiment, the user is prompted for confirmation before changing the connection destination from the first network to the second network. With this, it is possible to prevent the PC 101 from being connected, even if it is temporary, to the second network without the user's intention when a network administrator has restricted devices to be connected to the second network, for example.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A method of controlling an information processing apparatus (101), the method comprising:
transmitting, to a communication apparatus (103), information related to a second network different from a first network to which the information processing apparatus (101) was connected when a predetermined instruction for executing network setting of the communication apparatus (103) was accepted;
after transmitting the information related to the second network, searching for the communication apparatus (103) via the first network;
based on the communication apparatus (103) not being discovered in the search via the first network, displaying a screen related to a connection destination of the information processing apparatus (101); and
after displaying the screen, performing control such that the connection destination of the information processing apparatus (101) is a network that is based on a user instruction on the screen among the first network and the second network.

2. The method according to claim 1, wherein
in a case where a first user instruction is accepted in the screen, control is performed such that the connection destination of the information processing apparatus (101) is the first network, and in a case where a second user instruction is accepted in the screen, control is performed such that the connection destination of the information processing apparatus (101) is the second network.

3. The method according to claim 1 or 2, further comprising:
based on the communication apparatus (103) not being discovered in the search via the first network, changing the connection destination of the information processing apparatus (101) to the second network; and
after changing the connection destination of the information processing apparatus (101) to the second network, searching for the communication apparatus (103) via the second network,
wherein
based on the communication apparatus (103) not being discovered in the search via the first network and the communication apparatus (103) being discovered in the search via the second network, the screen related to the connection destination of the information processing apparatus (101) is displayed.

4. The method according to claim 3, further comprising:
based on the communication apparatus (103) not being discovered in the search via the second network, changing the connection destination of the information processing apparatus (101) to the first network without displaying the screen related to the connection destination of the information processing apparatus (101).

5. The method according to claim 3 or 4, further comprising:
based on the communication apparatus (103) not being discovered in the search via the second network, deleting the information related to the second network stored in the information processing apparatus (101).

6. The method according to any one of claims 3 to 5, wherein
in a case where the communication apparatus (103) is not discovered in the search via the first network, the screen related to the connection destination of the information processing apparatus (101) is not displayed and a predetermined notification screen for the communication apparatus (103) not being discovered is displayed.

7. The method according to any one of claims 3 to 6, further comprising:
after changing the connection destination of the information processing apparatus (101) to the second network, determining whether the information processing apparatus (101) is in a state in which the information processing apparatus (101) can connect to the Internet,
wherein
based on the communication apparatus (103) not being discovered in the search via the first network and the communication apparatus (103) being discovered in the search via the second network and the determination that the information processing apparatus (101) is in a state in which the information processing apparatus (101) can connect to the Internet after the connection destination of the information processing apparatus (101) has been changed to the second network, the screen related to the connection destination of the information processing apparatus (101) is displayed.

8. The method according to claim 7, further comprising:
based on determining that the information processing apparatus (101) is not in a state in which the information processing apparatus (101) can connect to the Internet after changing the connection destination of the information processing apparatus (101) to the second network, changing the connection destination of the information processing apparatus (101) to the first network without displaying the screen related to the connection destination of the information processing apparatus (101).

9. The method according to claim 7 or 8, wherein
in a case where the network that is based on the user instruction on the screen is the first network, the connection destination of the information processing apparatus (101) is changed to the first network, and
in a case where the network that is based on the user instruction on the screen is the second network, the connection destination of the information processing apparatus (101) is maintained to be the second network.

10. The method according to any one of claims 1 to 9, further comprising:
receiving, from the communication apparatus (103), a list of networks discovered in a search executed by the communication apparatus (103); and
in a case where the first network is included in the list, transmitting, to the communication apparatus (103), information related to the first network,
wherein
in a case where the first network is not included in the list, the information related to the second network is transmitted to the communication apparatus (103).

11. The method according to claim 10, further comprising:
in a case where the first network is not included in the list, displaying the list; and
accepting, from a user, a selection of any network from the displayed list,
wherein
the second network is a network selected by the user from the list.

12. The method according to claim 11, wherein
after the information related to the first network has been transmitted, the communication apparatus (103) is searched for via the first network;
in a case where the communication apparatus (103) is not discovered in the search via the first network executed after the information related to the first network has been transmitted, the screen related to the connection destination of the information processing apparatus (101) is not displayed and a predetermined notification screen for the communication apparatus (103) not being discovered is displayed.

13. The method according to claim 12, further comprising:
in a case where the predetermined instruction has been accepted, changing the connection destination of the information processing apparatus (101) to the communication apparatus (103); and
after transmitting the information related to the second network via a connection between the information processing apparatus (101) and the communication apparatus (103), changing the connection destination of the information processing apparatus (101) to the first network,
wherein
after the connection destination of the information processing apparatus (101) has been changed to the first network, the communication apparatus (103) is searched for via the first network.

14. An information processing apparatus (101) comprising:
transmission means configured to transmit, to a communication apparatus (103), information related to a second network different from a first network to which the information processing apparatus (101) was connected when a predetermined instruction for executing network setting of the communication apparatus (103) was accepted;
search means configured to, after the information related to the second network has been transmitted, search for the communication apparatus (103) via the first network;
display means configured to, based on the communication apparatus (103) not being discovered in the search via the first network, display a screen related to a connection destination of the information processing apparatus (101); and
control means configured to, after the screen is displayed, perform control such that the connection destination of the information processing apparatus (101) is a network that is based on a user instruction on the screen among the first network and the second network.

15. A program including instructions, which when executed by one or more processors of an information processing apparatus (101), cause the information processing apparatus (101) to execute steps of the method defined in any one of claims 1 to 13.
